# EUROPEAN PATENT SPECIFICATION

(11) **EP 0 375 771 B1**
(45) Date of publication and mention of the grant of the patent: **14.02.1996**
(21) Application number: 89907918.0
(22) Date of filing: 15.06.1989
(51) Int. Cl.: G01B 7/12, G01B 5/00

(54) **TEMPERATURE-COMPENSATED QUANTITATIVE DIMENSIONAL MEASUREMENT DEVICE WITH PROGRAMMABLE IN-TOLERANCE/OUT-OF-TOLERANCE INDICATIONS**
QUANTITATIVE DIMENSIONSMESSANORDNUNG MIT TEMPERATURAUSGLEICH UND MIT PROGRAMMIERBAREN ANZEIGEN FÜR DAS EINHALTEN ODER VERLASSEN EINES TOLERANZBEREICHS
DISPOSITIF DE MESURE DIMENSIONNELLE QUANTITATIVE A TEMPERATURE COMPENSEE, AVEC INDICATION PROGRAMMABLE DU RESPECT OU NON DES TOLERANCES

(30) Priority: 01.07.1988 US 214636
(43) Date of publication of application: 04.07.1990
(73) Proprietor: Wachtler Trust Management, Solana Beach, CA 92075 (US)
(72) Inventor: WACHTLER, William, R., Solana Beach, CA 92075 (US)
(74) Representative: Strehl Schübel-Hopf Groening & Partner
(86) International application number: PCT/US89/02639
(87) International publication number: WO 90/00246

(56) References cited:
- US-A- 2 222 336
- US-A- 3 311 986
- US-A- 3 921 300
- US-A- 4 141 149
- US-A- 4 389 788
- US-A- 4 443 945
- US-A- 4 736 313
- US-A- 4 761 887
- No further relevant documents disclosed

## Description

### 1. Field of the Invention

The present invention concerns the dimensional measurement of workpieces that undergo variations in dimension with changes in temperature. The workpieces are measured by gauges that themselves undergo variations in dimension with changes in temperature. The present invention more particularly concerns measurement systems that compensate for the temperature-induced dimensional variation of workpieces, and/or the temperature-induced dimensional variation of gauges, in measuring the dimensions of workpieces with gauges.

The present invention further concerns the indication of the in-tolerance/out-of-tolerance condition of a measurement made on a workpiece by a quantitative dimensional measurement gauge. The present invention more particularly concerns variably presetting any of (i) a reference dimension, (ii) a tolerance range by independent preset of upper and lower tolerance limits, and (iii) other variables prior to qualifying the quantitative dimensional measurement of a workpiece to be within or without tolerance limits.

### 2. Background of the Invention

### 2.1 The Effect of Temperature on Dimensional Measurement

It is known that certain materials, particularly metals, expand and contract with temperature. This expansion or contraction is normally expressed as a coefficient of expansion. Such a coefficient of expansion is expressed in terms of dimension per unit dimension per degree temperature. For example, a coefficient of expansion on the order of .000012 cm per cm per degree Celsius (.000007 inches per inch per degree Fahrenheit) is typical for certain ferrous metals.

Dimensional changes with temperature obviously mean that a metal workpiece does not measure the same dimensions at different temperatures. This makes it imprecise to determine the true, temperature-normalized, dimensions of the workpiece unless the workpiece is brought to a standard, reference, temperature. This standard, reference, temperature at which workpieces are measured is often 15°C (59°F) by convention, and is sometimes and for some purposes established at other particular temperatures.

It is not always convenient to measure the dimensions of a workpiece while it is at the predetermined reference. The workpiece may be either hotter or colder than the reference temperature and may correspondingly exhibit expanded or contracted (or vice versa) dimensional measurements. If the accuracy of quantitative dimensional measurement, or the accuracy of qualifying a workpiece to some dimensional standard, is critical, then it is either necessary (i) to bring the workpiece to the predetermined, reference temperature at which the measurements may be performed, (ii) to compensate for the effect of the difference between the actual workpiece temperature and the reference temperature on the dimension(s) of the workpiece or (iii) to have a pre-determined dimensional reference "standard" that is both at the temperature of the part to be measured and that is also of the same material, and to measure the difference between the "standard" and the part.

If the workpiece has considerable thermal mass, and/or it is not readily subject to be adjusted in temperature, and/or a standard of identical material is not available, then it may be more efficient, or even mandated,. that the workpiece should be measured at its existing temperature. That dimension which the workpiece would exhibit should it be brought to a predetermined, reference, temperature may then be calculated. This calculation requires knowledge of (i) the measured dimension, (ii) the workpiece actual temperature, and (iii) the thermal coefficient of expansion for the material of the workpiece.

### 2.2 Previous Temperature-Compensated Dimensional Measurement Systems

One previous example of a temperature-compensated dimensional measuring system is shown in U.S. Patent No. 3,594,909 for an APPARATUS FOR MEASURING A DIMENSION OF A MEMBER to Schultz. The workpiece being measured is, for example, a wide-flange beam being formed in a rolling mill. The flange is measured while it is still near its rolling temperature of approximately 300°C (600°F). The temperature-compensated dimensional measuring system taught within the Schultz patent obviates the need for permitting a sample piece of the beam to cool to room ambient temperature before its dimensions and/or symmetry may be checked for unacceptable deviations from normal. In the apparatus of Schultz, the temperature measurement means is a thermocouple probe. The probe contacts a workpiece that is elevated in temperature. A computer receives the signals from this probe and calculates the temperature-adjusted workpiece measurements. These measurements are, however, displayed only somewhat inexactly as a trace registered upon a strip recorder. Manual monitoring of the traces being recorded upon the strip recorder allows recognition of the conformity or nonconformity of the workpiece (typically a hot rolled I-beam) to symmetry and dimensional standards.

The previous temperature compensation of Schultz is primarily directed to producing and displaying an output signal representative of dimension upon a strip recorder when this output signal will be within a predefined range, and when the resulting trace will be observable for acceptable or unacceptable deviations within this range, regardless of variations in temperature of the workpiece for which dimension is being sensed. Schultz is concerned with checking I-beams for conformance with design standards; i.e., so that each I-beam will carry its design load and will mate with other I-beams of the same specification. Schultz is not concerned with dimensional measurement supporting the precision fitting of parts, as is the present invention.

Schultz is not concerned with precise quantitative dimensional measurement of a workpiece while the workpiece is at a displacement temperature from a predetermined, reference, temperature. Schultz is not concerned that a measured dimension may be converted to that temperature-normalized dimension which a workpiece would exhibit should it be brought to the reference temperature. The "compensation" of Schultz is basically an "accounting" for rather large dimensional deviations of a steel beam workpiece when it is still near its rolling temperature of about 900°C (1600°F).

Another previous example of a temperature-compensated dimensional measuring system is shown in U.S. Patent Serial No. 4,141,149 for a PORTABLE COMPARATOR GAGE FOR MEASURING THE RELATIVE DEVIATION IN THE DIAMETER OF CYLINDERS to George, et al. A portable comparator gauge measuring the relative deviation in the diameter of a cylindrical workpiece from the diameter of a reference standard compensates for inaccuracies in its measurement that are resultant from variations in the temperature of the cylinder and the gauge from a nominal temperature. The comparator gauge of George, et al. has no intrinsic knowledge of the nominal, or reference, temperature of measurement. It must be calibrated to a standard, or reference, cylinder that is supposed to be at the reference temperature. When, and only when, the comparator gauge of George, et al. is so calibrated to a standard cylinder that is at a reference temperature can the gauge later make an accurate, temperature-compensated, comparative measurement of a workpiece cylinder.

Alas, it is no easier to keep a standard, or reference, cylinder or gauge block at a precisely predetermined reference temperature than it is to maintain a workpiece at this temperature. A standard cylinder or gauge block is commonly taken onto the factory floor, and is subject to assume temperatures that are both (i) widely deviant from a reference temperature, and (ii) time varying. It is desired to make frequent calibration to the standard cylinder or gauge block, regardless of its instantaneous temperature. The gauge of George, et al. cannot be calibrated to a standard cylinder that is at other than the reference temperature. The quantitative dimensional measurement device in accordance with the present invention will be seen to avoid this limitation.

The present invention is concerned with precise quantitative compensation of accurate (typically ± .0254 mm or .001 inches) dimensional measurements of a workpiece when the temperature of the workpiece over a wide range (typically 21°C ± 28°C or 70°F ± 50°F) is accurately known (typically within ± .5°C or 1°F). The reason that the present invention is so concerned is not simply to garner measurement numbers. The present invention is directed to better enable a part "A" to mesh or fit into part "B". This simple concept is important. If at 15°C (59°F) a hole "A" is 50.8 ± .00254 mm (2.0000 ± .0001 inches) in diameter, and if at the same 15°C (59°F) a shaft "B" of the same material is 50.775 ± .00254 mm (1.9990 ± .0001 inches) in diameter, then the shaft will (and not just "should") fit within, and always fit within, the hole. It is of great benefit to know that things will mesh or fit together, and to know how well things will mesh or fit together, as hereinafter explained.

### 2.3 The Requirement for Temperature-Compensated Dimensional Measurement

The need for temperature-compensated quantitative dimensional measurement is greater than is commonly recognized. Commonly available measurement reference standards, typically ground steel, are accurate to ± .000254 mm (.00001 inch). The dimensions of some workpieces, such as the journals of railroad axles hereinafter discussed, are augmented by process of plating to accuracies of ± .00127 mm (.00005 inches). These same journals are diminished by process of machining to accuracies of ± .00254 mm (.0001 inch). (The journals may of course be machined undersize and plated back to a desired dimension.)

This degree of dimensional accuracy is common. Yet these accuracies are completely overwhelmed by any difference in workpiece temperature, and/or the temperature of the frame of the measuring tool that measures the workpiece, from a reference temperature. As mentioned, steel has a coefficient of expansion on the order of .000012 cm per cm per degree Celsius (.0000068 inches per inch per degree Fahrenheit). Consequently, for workpiece larger than 2,5 cm (1 inch) an uncompensated temperature variation of 5°C (10°F) or more can be the single greatest source of measurement inaccuracy.

Uncompensated dimensional variation due to temperature variation has been, in the opinion of the inventor, a prime driver in the setting of dimensional standards to which larger mechanical parts such as journals and bearings are commonly constructed. The nominal ± .0254 mm (.001 inch) tolerance to which these parts (such as railroad axles, discussed hereinafter) are sized is not the tolerance at which reasonably optimized, let alone best, mechanical wear performance is obtained. Mechanical wear of parts at tolerances of ± .00254 mm (.0001 inch) is markedly better than at lessor tolerances, especially with modern lubricants. For example, automobile manufacturer Volvo of Sweden has gained a reputation for durability of automotive mechanical parts which may be due, in part, to the little-recognized fact that the parts of this manufacturer are reportedly machined to better dimensional accuracy than the Society of Automotive Engineers (SAE) standards followed by the domestic U.S. automotive industry.

If higher dimensional accuracies are beneficial, and realizable, then why are these higher accuracies not common? Why are the dimensional standards of industry so liberal? A primary cause as to why higher dimensional accuracies than current standards are not cost effectively realizable is the difficulty in cost effective accurate control of temperature. Accurate, ± .5°C (1°F), control of ambient temperature is typically difficult and expensive. Worse, a tight control of ambient temperature does not invariably guarantee tight control of a workpiece temperature because the workpiece temperature may be affected by heats of machining and other processing. Finally, temperature stabilization of workpiece thermal masses takes time, and time is equivalent to cost in a production environment.

As well as the sensitivity of dimensional measurements of workpieces to temperature changes, it should be well understood that the gauges and tools of industry are themselves generally suffering much greater dimensional variation due to temperature change during use than any other single factor to which the gauges or tools are commonly subject, That the operative heads of drilling and milling machines change size with variation in their temperature is obvious. But even such tool faces as the cutter knife of machine that cuts veneer from a log are unexpectedly subject to undesirable change with temperature. A heat-expanded veneer cutter knife must cut a thicker wood veneer (else the cold knife would cut the veneer too thin), reducing the amount of veneer that can be produced from a log. Undesired dimensional variation with temperature change thus directly translates into reduced production of veneer. The veneer produced also exhibits an undesirable increased variability of thickness. This is but one of the more obscure of many examples that generally show that dimensional variation due to temperature change is an underecognized cost driver both during production and during life cycle use of the products produced.

### 2.4 An Example of a Dimensional Measurement Problem Strongly Affected by Temperature Variation

One particular example of a workpiece upon which it is desired to obtain precise dimensional measurements while it is at a temperature differential from a predetermined, reference, temperature is the axle of a railroad car. The axle of a railroad car, typically made of steel, is both large and heavy. It exhibits a large thermal mass. The axles are normally received into an indoors test environment from the out-of-doors at temperatures which, in most regions of the country during most portions of the year, are distinctly neither at room temperature (typically 23°C or 73°F) nor the reference temperature (nominally 15°C or 59°F).

The dimensions of the axle must be determined at a reference temperature, nominally 15°C (59°F). If the axles have become warmer or colder than this reference temperature by exposure to the environment, then a delay of many hours, or days, would be encountered if the axles were to be permitted to thermally stabilize at a 15°C (59°F) ambient temperature.

Because of these problems with temperature stabilization of railroad car axles, the axles are typically not quantitatively measured, but are rather only compared to a reference gauge, or "Jo", block. The Jo block is of the identical material to the axle and is of a known dimension. This dimension is the nominal standard for the journal of a railroad car axle. A number of axles subject to comparison are equalized at the same temperature as the "Jo" block, typically at the room temperature of the test environment. The temperature equalization is normally aided by fans that blow air over both the "Jo" block and the axles for an extended period, typically overnight.

In order to compare the axles a snap gauge measurement tool is first zeroed to the "Jo" block. The tool is then used to measure a plus (+) or minus (-) size differential of an axle. The process continues with repetitive rezeroings and measurements. Ultimately the tolerances of the axles relative to the "Jo" block are known even if the precise quantitative dimensions of the axles are only but imperfectly known.

The utility of comparing an object to be undersize or oversize relative to a reference is not as useful as knowing the exact, temperature-normalized, dimensions of such object. For example, the diameter of an axle of a railroad car is typically desired to be quantitatively measured to within ± .0254 mm (.001 inch). This accuracy in measurement is necessary to determine whether axles are (i) repairable to be within required normal dimensional range, (ii) issuable for use by being qualified to be within normal dimensional range, or (iii) subject to scrappage for being of unrepairable dimensions. Typically, a railroad axle larger than 15.7264 cm (6.1915 inches) in diameter is too large, but repairable. An axle diameter between 15.7264 cm and 15.7239 cm (6.1915 and 6.1905 inches) is within the acceptable tolerance range. An axle diameter between 15.7188 cm and 15.7239 cm (6.1885 and 6.1905 inches) is slightly too small, but normally repairable. An axle diameter below 15.7188 cm (6.1885 inches) is unsuitable for repair or subsequent use.

The stringent requirement that the axle of a railroad car should exhibit a diameter of 15.7226 cm ± .00127 cm (6.190 plus or minus .0005 inches) is due to the fact that dimensional mismatch between the axle and its bearing can result, at the high loads to which railroad cars are subject, excessive rolling friction. Such rolling friction results in thermal build-up and possible catastrophic failure of the axle and/or axle bearings. In the extreme case this can result in derailments. It is believed that as many as 60% of the catastrophic failures of railroad car bearing axle assemblies may be traceable to out of tolerance bearing race or axle journal conditions.

Meanwhile that the relatively large railroad car axle must be measured very precisely, each change in temperature of this axle of 6.7°C (12°F) causes a variation in the shaft diameter of approximately .0127 mm (.0005 inches), or fully one-half of the total .0254 mm (.001 inch) tolerance range within which the axle must be dimensionally qualified! (Explicitly, 15.7226 cm x .000 012 cm per cm per °C x 6,7°C = .00126 cm, or 6.190 inches x .0000068 inches per inch per °F x 12°F = .0005051.)

Without temperature-compensated measurement, it is obviously necessary not only that an axle should be brought approximately to the predetermined, reference measurement temperature, but that, indeed, the axle should be brought very precisely to this temperature. The aforementioned dimensions are those that the standard railroad axle must exhibit at precisely 15°C (59°F). It is hard to make a large thermal mass railroad car axle assume, and hold, this precise temperature. Accordingly, some axles are sent for rework, and some are even rejected, incorrectly. Conversely, and more detrimentally, certain axles for which the dimensions are improper may otherwise be certified for use.

Accordingly, the precise measurement of large, dimensionally thermally sensitive objects such as railroad car axles with high quantitative accuracy typically requires performing and reperforming the measurement process. Typically, a railroad car axle is measured several times before a confidence level can be developed that the correct measurements have actually been registered. This is obviously inefficient. Additionally, it is unsound safety practice that the measurement process should be so extremely dependent upon temperature variation that a difference in the temperature of the workpiece of a mere 27 degrees Celsius (48°F) (corresponding to the difference between 15.7239 cm and 15.7188 cm (6.1905 inches and 6.1885 inches)) might cause an axle that is correctly subject to permanent scrappage to instead be issued directly for use without rework! An improved device for the quantitative dimensional measurements of workpieces that are dimensionally sensitive to temperature change is required.

### 2.5 A Requirement For Indication Of The In-Tolerance/Out-Of-Tolerance Condition Of A Measurement, And For Flexibly Presetting The Tolerance Of Such Measurement

Most times during use of a quantitative dimensional measurement gauge, with or without temperature compensation, the derived measurement quantity is of interest not for its absolute magnitude, but rather for being within, or without, some prescribed tolerance about some prescribed reference dimension. For example, a gauge is often used to measure a number of like workpieces in order to qualify each as being dimensionally within, or without, tolerance. The results of this determination may indicate, for example, that a workpiece is either to be reworked or scrapped or is instead issued for use as being of an appropriate dimension.

During the course of qualifying workpieces to be within, or without, a dimensional tolerance by quantitatively measuring their dimensions, it is useful if the measurement gauge automatically determines, and indicates, the in-tolerance or out-of-tolerance condition. A gauge that so indicates the results of an in-tolerance/out-of-tolerance determination is less likely to be misinterpreted, or misread in its quantitative indication (if any is provided). A gauge that clearly indicates a go/no-go condition dependent upon the workpiece being either in-tolerance or out-of-tolerance may be used by a person of lower skill level, or by a person of equal skill level to produce generally more reliable results, than can a gauge that only displays a quantitative dimensional measurement, and that requires the user to make the in-tolerance/out-of-tolerance determination from this displayed measurement.

An in-tolerance/out-of-tolerance indication by a measurement gauge may be as simple as showing a specific measurement on a scale having differentiated background regions, for example background regions that are green where a scale measurement reading is in-tolerance, and background regions that are red when a measurement reading is out-of-tolerance. The problem with such a simplistic tolerance determination, and display, is that it does not besuit the generalized, multi-purpose, quantitative measurement of diverse workpieces (although many workpieces of an individual type may be measured at one time in series). It would therefore be useful that a measurement gauge intended for generalized applications of quantitative dimensional measuring tasks might also be flexible in the manner by which each of (i) a reference dimension, and (ii) dimensional tolerances about this reference dimension, could be set and indicated.

### SUMMARY OF THE INVENTION

The present invention contemplates compensating for the dimensional change of a workpiece, or of a gauge, or of both a workpiece and a gauge, with changes in temperature about a predetermined reference temperature during dimensional measurement of the workpiece with the gauge. The compensation is computed in consideration of predetermined dimensional sensitivity(ies) of the workpiece, of the gauge, or of both the workpiece and the gauge, to changes in temperature.

The devices in accordance with the invention as defined in the present claims produce a workpiece-temperature-compensated, a gauge-temperature-compensated, or a workpiece- and gauge-temperature-compensated calibrated dimensional measurement of a workpiece by a gauge when neither the workpiece, nor the gauge, nor both the workpiece and gauge are at the reference temperature. Neither are the workpiece and gauge necessarily at the same temperature.

Those dimensional variations with temperature that are successfully and accurately compensated for during dimensional measurements in accordance with the present invention are typically a large, and often a largest, source of measurement error during many dimensional measurements of diverse workpieces with diverse gauges. Large measurement error due to uncompensated dimensional change of workpieces with temperature is especially true of workpieces that are large, that exhibit large thermal coefficients of expansion (or contraction), or that are of temperatures much different from a reference temperature. Large measurement error due to uncompensated dimensional changes of gauges with temperature is especially true of gauges that are large, that exhibit large thermal coefficients of expansion (or contraction), or that are of temperatures much different from the reference temperature.

The accuracy of the compensation performed by the present invention is essentially dependent only on (i) the accuracies of certain temperature sensing(s) and (ii) a correct knowledge of certain pertinent thermal coefficient(s) of expansion. The compensation accuracy is typically very high, relegating errors in dimensional measurement that are due to temperature deviation to magnitudes at or below other sources of measurement error. This simple concept is of great significance in the real world. To repeat, the accuracy of the compensation performed in accordance with the invention is typically so good as to make dimensional measurement accuracy to be primarily dependent upon the accuracy of gauge blocks and calibrated gauges, and not upon the temperatures of gauge blocks, gauges, and/or workpieces.

In accordance with a first aspect of the invention, a portable workpiece-temperature-compensated dimensional measuring device includes a gauge for measuring a dimension of a workpiece. The gauge typically includes a dimensional measurement assembly (such as a dial indicator or a linear variable differential transducer) moving relative to frame by contact with the workpiece. The gauge quantitatively measures a workpiece dimension, typically its outside or its inside diameter. Three point snap gauge, rocker gauge, and other common gauge configurations are suitably employed.

The device further includes a first thermal sensor, typically a thermistor. The thermal sensor is preferably held by the gauge in thermal communication with the workpiece. It measures the temperature of the workpiece as a first temperature.

The device further includes a computer, preferably a digital computer and typically a microcomputer. The computer receives the dimension measurement from the gauge and the first temperature measurement from the first thermal sensor. In consideration of a predetermined first dimensional sensitivity of the workpiece to temperature variations about a predetermined reference temperature, the computer computes the temperature-compensated dimension that the workpiece would measure to and by the selfsame gauge upon such times as the workpiece was to be at the predetermined, reference temperature.

The workpiece-temperature-compensated dimension is optionally displayed, typically by a digital display.

In accordance with still another, second, aspect of the invention, the portable workpiece-temperature-compensated dimensional measuring device may be further adopted so as to compensate for its own dimensional self-variation with temperature. In this case the device further includes a second thermal sensor, typically an active semiconductor electronic temperature sensor. The second thermal sensor is in thermal communication with the gauge for measuring its temperature as a second temperature.

In this case of compensating for the gauge temperature the computer further receives the second temperature measurement from the second thermal sensor. The computer now calculates, in further consideration of a predetermined second dimensional sensitivity of the gauge to variations in temperature about the predetermined reference temperature, that temperature-normalized dimension that the workpiece would measure to and by the selfsame gauge upon such times as both it and the gauge were to be at the predetermined reference temperature.

The first and second aspects of the invention can be reversed. Each of gauge-temperature-compensation and workpiece-temperature-compensation can be performed independently and exclusively of the other.

The temperature-compensated dimensional measuring device in accordance with the invention is typically integrally packaged. It is easy to calibrate and use, particularly because all temperature sensing(s) typically transpire in a manner that is preferably completely integrated with the dimensional measurement process. The dimension and temperature sensings, and the necessary calculations, are fully automated and rapid. The device reads to the operator much like a digital readout gauge, yet it is capable of controllably displaying all parameters and sensed data by which it derived the temperature-compensated measurement.

The temperature-compensated dimensional measuring device in accordance with the present invention particularly enables predetermination of the fit of workpiece components with accuracies that have not been attainable previously without a significant expenditure of time and manpower.

The present invention still further contemplates a portable measuring device that indicates the in-tolerance/out-of-tolerance condition of a measurement made on a workpiece. The device includes (i) a gauge for measuring the dimension of a workpiece, (ii) a comparator for comparing the measured workpiece dimension to a predetermined dimensional tolerance range about a predetermined reference dimension, and (iii) an indicator, responsive to the comparing of the comparison means, for indicating that, by results of the comparing, the measured workpiece dimension is either within or without the dimensional tolerance range.

The dimensional tolerance range is preferably variably predetermined, preferably by manual data inputs to the device and more preferably by independent manual input of both upper and lower limits of the dimensional tolerance range.

Still further, the device permits variable predetermination of a reference dimension, or that dimension relative to which a measured dimension will be determined to be either within, or without, a dimensional tolerance range. The variable predetermination of the reference dimension preferably transpires merely by manually pressing a pushbutton while the gauge is measuring a gauge block standard. Thereafter the reference dimension will be the measured dimension of the gauge block.

In the most sophisticated embodiments of the device, a number of indicators are responsive to the comparing for indicating that, by results of the comparing, the measured workpiece dimension is either within or without the tolerance range of dimensions and, furthermore, if the measured workpiece dimension is without the tolerance range, then it is either (i) repairable so as to come within the range of dimensions or (ii) unrepairable and subject to scrappage.

The temperature-compensated measurement, and the in-tolerance/out-of-tolerance indication, aspects of the present invention can each be used separately. However, both aspects are preferably used jointly in a single device to perform quantitative dimensional measurement that is both (i) temperature-compensated in its accuracy, and (ii) user-friendly in identifying whether a particular measured workpiece dimension is either within, or without, a variably preset dimensional tolerance range.

In particular, a temperature-compensated, in-tolerance/out-of-tolerance indicating, quantitative measurement device in accordance with the present invention may be both calibrated on gauge blocks, and used to measure workpieces, that are not at a reference temperature. The device is quickly calibrated to a gauge block at any temperature because the temperature sensors within the device are themselves calibrated, and the device determines the temperature deviation of the gauge block from a reference temperature. From this determination the device is able to compute what the gauge block standard would measure should it be at the reference dimension, and this computed measurement becomes the reference measurement. A dimensional tolerance range, and a broader refurbishment/scrappage range, about this reference measurement may be quickly set. The device may then be used to perform temperature-compensated dimensional measurements of workpieces, displaying a true, temperature-compensated, quantitative dimensional measurement and indicating an in-tolerance/out-of-tolerance condition for each measured workpiece.

These and other aspects and attributes of the present invention will become increasingly clear upon reference to the following drawings and accompanying specification.

### BRIEF DESCRIPTION OF THE DRAWINGS

FIGURE 1 is a diagrammatic view showing a first embodiment of a temperature-compensated quantitative dimensional measurement device in accordance with the present invention, particularly for measuring the inside diameter of a workpiece.

FIGURE 2 is a diagrammatic view showing a second embodiment of the temperature-compensated quantitative dimensional measurement device in accordance with the present invention, particularly for measuring the inside diameter of a workpiece.

FIGURE 3 is a detailed view, partially in cross-section, showing a shoe assembly and a temperature sensor that are within the first embodiment of the temperature-compensated dimensional measuring device shown in Figure 1.

FIGURE 4 is a graph showing a typical variation of dimension with temperature due to a coefficient of expansion of four common steel workpieces, typically the axles of railroad cars.

FIGURE 5 is an electrical schematic showing a first embodiment of the electrical circuit which may be used within either, the first or the second, embodiment of the temperature-compensated dimensional measuring device in accordance with the present invention.

FIGURE 6 is a schematic block diagram showing a second embodiment of an electrical circuit which may be used within either, the first or the second, embodiment of the temperature-compensated dimensional measuring device in accordance with the present invention.

FIGURE 7, consisting of FIGURE 7a through FIGURE 7b, is a detail schematic diagram showing a variant of the second embodiment of an electrical circuit previously seen in schematic block diagram in Figure 6, which variant embodiment (i) indicates in-tolerance/out-of-tolerance conditions and (ii) accepts user specification of a tolerance range, as well as (iii) performing temperature compensation, within a measuring device in accordance with the present invention.

### DETAILED DESCRIPTION OF THE INVENTION

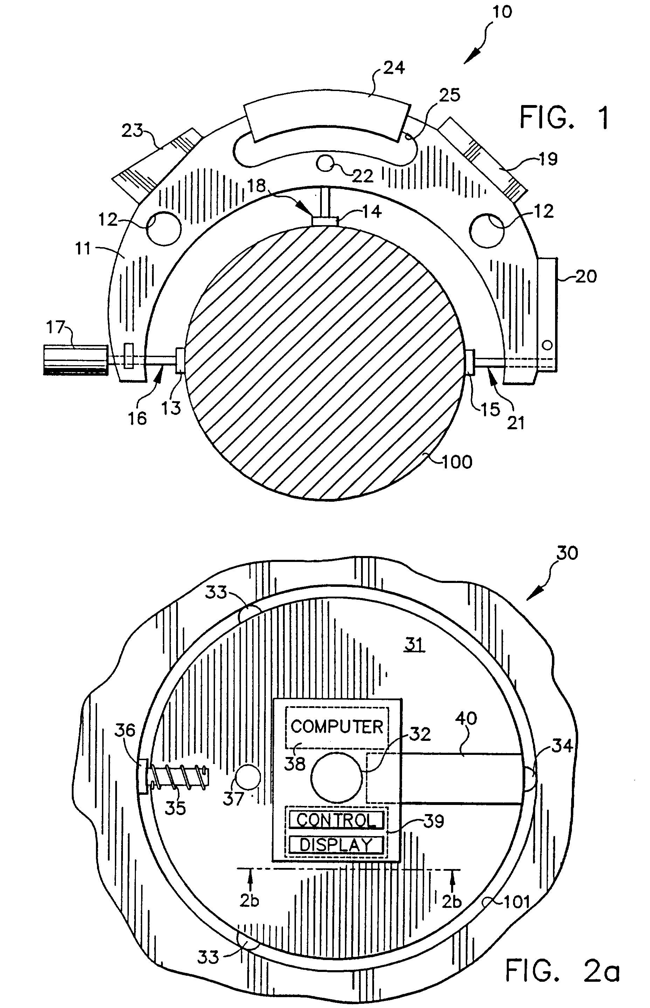

A first embodiment of a temperature-compensated and tolerance-indicating quantitative dimensional measurement device in accordance with the present invention, particularly for measuring the outside diameter (OD) of a workpiece, is mechanically diagrammatically illustrated in Figure 1. All components of the first embodiment of the measuring device 10 are typically mounted to frame 11, but need not invariably be so mounted. The frame 11, typically made of metal and more typically aluminum, is in the shape of a "C" clamp. The frame 11 typically defines one or more lightening holes 12.

During use of the device 10 for measuring, the frame 11 is positioned about the outside diameter (OD) of workpiece 100. The frame 11 fixes shoes 13 and 14 in contact with the workpiece 100 at substantially one quadrant, or 90°, of separation along the circumference of the substantially cylindrical workpiece 100. The frame 11 also supports a third, moveable, shoe 15 in a position contacting the workpiece 100 at substantially 180° from fixed shoe 13. The 3 point suspension of frame 11 by its shoes 13-15 positioned against workpiece 100 constitutes the commonly recognized form of a three point snap gauge.

The shoe 13 is fixed to frame 11 during use of device 10 for measuring, but is adjustable relative to frame 11. The shoe adjustment assembly 16 includes micrometer 17. The micrometer 17 is manually rotated to force via a threaded shaft (not shown) the shoe 13 into greater or lesser extension from frame 11.

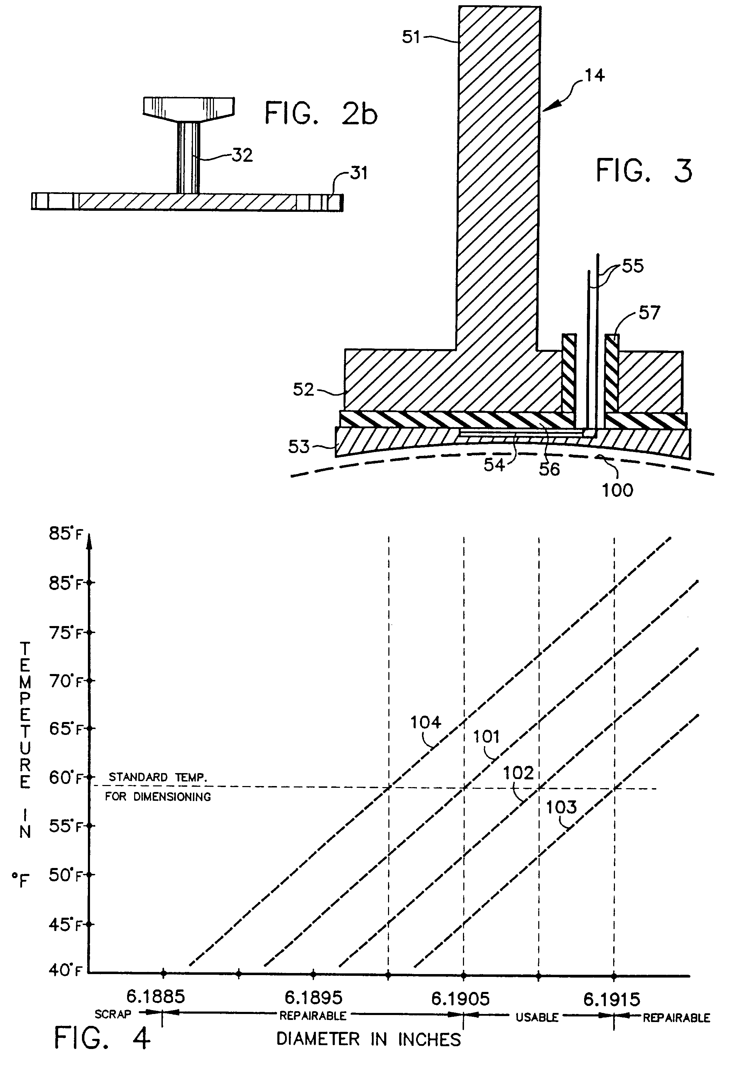

The shoe 14 is positionally constantly fixed to frame 11. The shoe 14 is but part of a positioning shoe and workpiece temperature sensor 18. The positioning shoe and workpiece temperature sensor 18, which will be shown in detailed view in Figure 3, detects the temperature of workpiece 100 at the position of shoe 14 when the measuring device 10 is operatively positioned thereabouts. An electrical signal bearing information on this detected temperature is electrically communicated (by a wire pathway not shown in Figure 1) to computer 19.

The moveable measuring shoe 15 is moveable relative to frame 11. It is mechanically connected to size signal generator 20 which is affixed to frame 11. The moveable measuring shoe 15 size and signal generator 20 jointly constitute the dimensional measuring assembly 21. The dimensional measuring assembly 21 produces an electrical signal that bears information on the displacement of moveable shoe 15 by workpiece 100. This signal is received (by a wired interconnection path not shown in Figure 1) at computer 19. The magnitude of the displacement of moveable shoe 19, and the informational content of the electrical signal produced by dimensional measuring assembly 20, is, of course, indicative of the size of workpiece 100 relative to frame 11. Accordingly, the dimensional information produced by dimensional measuring assembly 21 is the outside diameter of workpiece 100 measured relative to frame 11.

The frame temperature sensor 22 produces an electrical signal that indicates the temperature of frame 11. This signal is received (by a wired interconnection path not shown in Figure 1) by computer 19.

In accordance with the present invention, the computer 19 uses the measured workpiece dimension information received from dimensional measuring assembly 21 in combination with either or both of (i) the workpiece temperature information received from positioning shoe and workpiece temperature sensor 18 and (ii) the frame temperature information received from frame temperature sensor 22. The computer 19 computes a workpiece-temperature-compensated OD of workpiece 100, a frame-temperature-compensated OD of workpiece 100, or a workpiece- and frame-temperature-compensated OD of workpiece 100.

The dimensional compensation resultant from the temperature deviation of the workpiece 100, of the frame 11, or of both the workpiece 100 and frame 11 from the predetermined reference temperature, nominally 59°F, is calculated in computer 19 from prior knowledge of the predetermined thermal coefficient(s) of expansion of the workpiece 100 and/or the frame 11. Neither the temperatures nor the predetermined thermal coefficients of expansion of workpiece 100 and frame 11 are necessarily equal. Indeed, the frame 11 and the entire temperature-compensated measuring device 10 is usually near room ambient temperature for having been maintained in the (typically) indoor environment of use. The workpiece 100 may, to the contrary, be at a temperature significantly different from room ambient temperature. Likewise, the frame 11 is typically aluminum exhibiting a considerably different thermal coefficient of expansion from the workpiece 100 which is typically steel.

The temperature-compensated dimension calculated by computer 19 is further communicated for use, such as for use by a human operator or by a machine control system. It is typically communicated by a wired interconnection (not shown in Figure 1) to display 23. The display 23, which is typically digital, displays the temperature-compensated dimension within a few seconds after the temperature-compensated measuring device 10 has been placed in stable mechanical and thermal contact with the workpiece 100. The computer 19 will not produce a display until sensed dimensions and temperature have stabilized.

The first embodiment of the temperature-compensated measuring device 10 in accordance with the present invention is typically positioned into mechanical and thermal contact with the workpiece 100 by being manually grasped about insulator 24 at the location of hand hold 25. The insulator 24 serves to diminish heat transfer from the human hand to the frame 11 during use of the measuring device 10 for temperature-compensated measurements. A slow variation in the temperature of frame 11 due to heating from the hand or from any other source is not harmful, especially in consideration of the compensation preferably to be performed by the device 10 for any thermally induced expansion or contraction of the frame 11. However, the insulator 24 primarily serves to prevent that the frame 11, especially if it is small and/or of low thermal mass and/or at a much different temperature than the hand, should receive sufficient heat transfer from the operator's hand so as to undergo such a rapid change in temperature as would prevent the temperature-compensated measurements of the device from properly settling.

The mechanical and electrical interrelationships and interconnections of the components of the temperature-compensated measuring device 10 deserve careful consideration. The dimension measured by dimensional measuring assembly 21 is always relative to frame 11. Therefore dimensional measuring assembly 21, and the micrometer adjustment assembly 16 against which dimensional measuring assembly 21 acts through workpiece 100, must always be affixed to frame 11.

In accordance with the design of a three-shoe snap gauge, a fixed shoe 14 will also be affixed to the frame 11. However, it is not necessary that the temperature sensing that is preferably done within the shoe 14 as part of the positioning shoe and workpiece temperature sensor assembly 18 must necessarily be performed within such shoe 14, or that such temperature sensing needs be performed at any fixed location relative to frame 11 or device 10. Indeed, the temperature sensing of the workpiece 100 could be remote. The action of the preferred embodiment of the temperature-compensated measuring device 10 that the temperature sensing by positioning shoe and workpiece temperature sensor 18 should inure naturally upon such times as the device 10 is positioned about workpiece 100 for measuring the dimensions thereof is obviously a beneficial feature of the present design.

It should further be understood that it is properly the temperature of frame 11 that is being sensed by frame temperature sensor 22, and that it is principally the expansion or contraction of frame 11 that is being compensated for by computer 19. The temperature of dimensional measuring assembly 21 is not directly sensed, but is normally at the temperature of frame 11. The dimensional measuring assembly 21, while undergoing some small dimensional variation with temperature, generally incurs a dimensional variation with temperature that is so small relative to the greater variation resultant from the greater dimension of frame 11 so that this thermal variation of assembly 21 may be essentially neglected. Alternatively, it may be considered that the temperature sensitivity of dimensional measuring assembly 21 is incorporated into a single coefficient of expansion factor that is applied to both itself and frame 11 by computer 19.

Both computer 19 and display 23 are shown in Figure 1 to be nominally affixed to frame 11. These components need not be, of course, integrally mounted to temperature-compensated measuring device 10. It is merely convenient that they should be so miniaturized and so mounted. In the preferred first embodiment illustrated in Figure 1 the entire temperature-compensated measuring device 10 is a unitary, self-contained, instrument.

A second preferred embodiment of the temperature-compensated measuring device in accordance with the present invention is shown in Figure 2, consisting of Figure 2a and Figure 2b. The temperature-compensated measuring device 30 is configured as a rocker gauge assembly having a substantially planar base 31 and a central handle 32. The handle 32 is grasped by the hand. Then dimensional measuring device 30 in the configuration of a rocker assembly is positioned within the bore of workpiece 101 so that the two fixed positioning feet 33 and the one moveable positioning foot 34 come into contact with the interior surface of the bore. Under the well understood principles of a rocker gauge assembly, the measuring device 30 is rocked from side to side in the bore of workpiece 101 until a minimum dimensional measurement is obtained.

Affixed to the base 31 and extending therefrom under the outwards force provided by spring 35 is a moveable temperature sensor 36. The temperature sensor 36 senses the temperature of the workpiece 101 at the interior of its bore. Meanwhile, another temperature sensor 37 senses the temperature of the base 31. Electrical signals from both temperature sensors 36 and 37 are routed (via pathways not shown in Figure 2a) to a computer 38. The computer 18 is typically located in an enlarged top to the handle 32. Also within the enlarged top to handle 32 is a display 39.

The positional movement of moveable foot 34 relative to base 31 incurred during rocking of measuring device 30 within the bore of workpiece 101 produces an electrical signal output from dimensional measurement assembly 40. This signal output is indicative of the positional displacement of moveable foot 34, and consequently of the inside diameter (ID) of the bore to workpiece 101. As with the first embodiment of the invention shown in Figure 1, the dimensional measurement assembly 40 measures dimensions relative to a frame, mainly base 31.

In accordance with the principles of the present invention, the computer 38 is preprogrammed with the thermal coefficients of expansion of both base 31 and workpiece 101. The computer 38 uses the temperature reading of workpiece 101 that is derived from temperature sensor 36 and the dimension that is derived from dimensional measurement assembly 40 in consideration of a predetermined thermal coefficient of expansion of workpiece 101 in order to derive a workpiece-temperature-compensated dimensional measurement.

The computer 38 preferably also uses the temperature of base 31 that is obtained from base temperature sensor 37 in conjunction with the same dimensional measurement of dimensional measurement assembly 40, and in further consideration of a predetermined thermal coefficient of expansion of the base 31, to derive a base-temperature-compensated dimensional measurement. The computer 38 preferably derives a compensated temperature measurement that is both workpiece- and base-temperature-compensated. The calculated temperature-compensated dimensional measurements are typically displayed by computer 38 (via wired interconnection not shown in Figure 21) in display 39.

An expanded view, partially in cross-section, of the positioning shoe and workpiece temperature sensor assembly 18 previously shown in Figure 1 is shown in Figure 3. A support 51 is permanently affixed to frame 11 (shown in Figure 1). The support 51 terminates in a widened lower base, or shoe, 52. The face 53 to shoe 52 is contoured in a complementary fashion to workpiece 100 in order to make good thermal contact. The face 53 to shoe 53 is made from highly thermally conductive material. It is typically made from metal and more typically silver.

A temperature sensor 54, typically a thermistor, is embedded within the typically silver face 53 to shoe 52. Electrical connection to the thermistor 54 is obtained via leads 55.

Backing the thermally conductive face 53 and the thermistor 54 is a layer of thermal insulator 56. At the region of the passage of leads 55 through shoe 52 the leads are protected by a grommet 57, typically made of neoprene rubber, that is both thermally and electrically insulating.

The preferred construction of the positioning shoe and workpiece temperature sensor 18 provides that the thermistor temperature sensor element will rapidly attain the temperature of the workpiece 100 (shown in Figure 1) into which it comes into thermal contact. Meanwhile, the insulating layer 56 and the insulating grommet 57 prevent heat from being transferred between workpiece 100 and support 51 and frame 11 (shown in Figure 1).

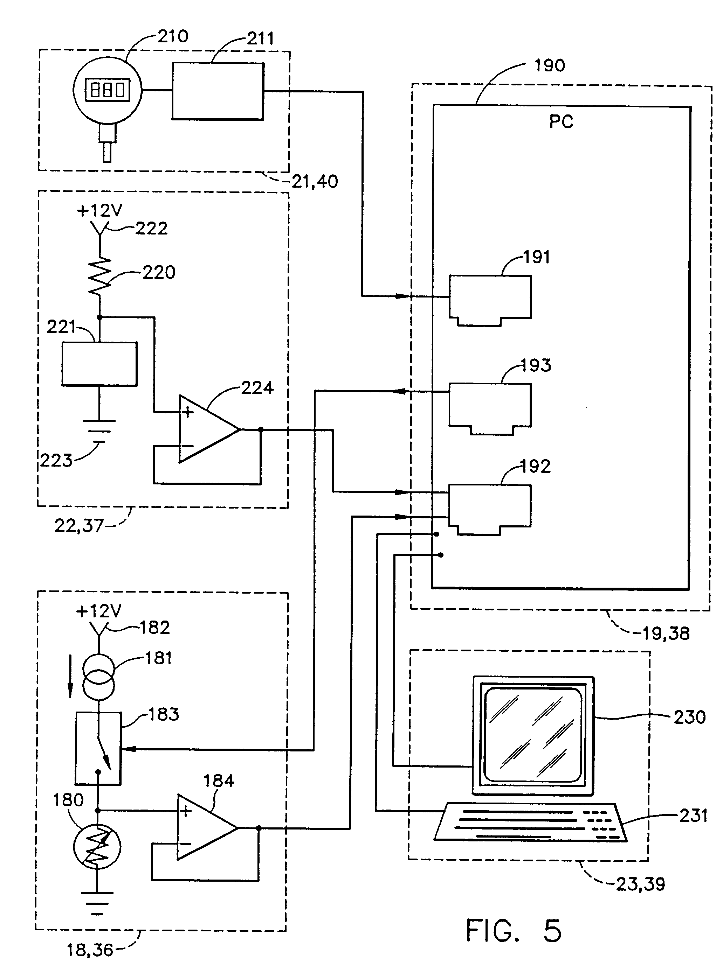

A conceptual analysis of the environment within which the temperature-compensated measurement devices in accordance with the present invention suitably function is aided by reference to the graph of Figure 4. The variation of dimension with temperature for four typically workpieces, mainly four steel railroad car axles, 101-104 is graphed in Figure 4. Because each of the workpieces 101-104 is of the same steel material, type 4340 by example, the slope of each curve is identical. Because the material of the axle workpieces 101-104 is homogenous, the plots are simple straight lines. The slope of these lines is the coefficient of expansion.

The suggested workpiece axle 101 is of minimum acceptable size and passes through the point of dimension 15.7239 cm (6.1905 inches) at the reference temperature of 15°C (59°F). Note that this axle 101 also measures to be good, or usable, by an uncompensated measurement taken at normal room temperature 21-23°C (70-73°F).

The axle workpiece 102 is suggested to be "perfect" in dimension, and exhibits a diameter of 15.7251 cm (6.1910 inches) at the reference temperature of 15°C (59°F), meaning that it is precisely in the center of the acceptable range of axle diameters. Note that this axle 102 erroneously measures too large (but repairable) by uncompensated measurement at high room temperature.

The axle 103 exhibits a maximum acceptable diameter of 15.7264 cm (6.1915 inches) at the same reference temperature of 15°C (59°F). Even though this axle 103 is acceptable and usable as is, it is erroneously identified as oversize by uncompensated dimensional measurement at room temperature 21-23°C (70-73°F).

Finally, the axle 103 is repairable but undersize. It measures, however, to be acceptable by uncompensated dimensional measurement at room temperature. To issue this axle for use will mean that its journal loosely fits a standard bearing, with high potential for early, possibly catastrophic, failure.

Further in accordance with the teaching of Figure 4, it is shown that each of the axles 101-104 exhibits a reduced dimension at temperature below the reference temperature. In fact, even the axle 102 which is "perfect" will appear to be outside the acceptable dimensional range, i.e. of less than 15.7239 cm (6.1905 inches) diameter, when it is measured at temperatures below approximately 7°C (45°F). Accordingly, the dimensional measurements actually performed on the axle workpieces 101-104 at temperatures other than the reference temperature of 15°C (59°F) must be adjusted, or compensated, in order to correctly determine that diameter which each workpiece would assume should it have been elevated, and stabilized, to the reference 15°C (59°F) temperature.

The particular preferred algorithm in accordance with the method of the present invention for compensating for both the temperature of the workpiece and of the measuring gauge is as follows.

A deviation from standard may be defined as:${\text{G}}_{\text{Std}} {\text{- G}}_{\text{Wkpc}} {\text{+ (T}}_{\text{Std}} {\text{-T}}_{\text{Wkpc}} {\text{) x X}}_{\text{Wkpc}} {\text{- (T}}_{\text{GStd}} {\text{-T}}_{\text{GWkpc}} {\text{) x X}}_{\text{Gage}}$ The result of this calculation is greater than one (1) if workpiece is larger than standard. Within the formula the expressions have the following meanings: Std = Calibration standard sample of workpiece Wkpc = the workpiece being measured
- G =: Dial Gage reading. The gage reading increases with increasing workpiece size.
- G_{Std} =: Gage reading on standard
- G_{Wkpc} =: Gage reading on workpiece
- T_{Std} =: Temperature reading on standard
- T_{Wkpc} =: Temp reading on workpiece
- T_{GStd} =: Temp reading of gage frame when measuring standard
- T_{GWkpc} =: Temp reading of gage frame when measuring workpiece
- X_{Gage} =: amount of expansion per degree of gage frame (constant in the length and temperature units being used by the gage and temperature sensors).
- X_{Wkpc} =: amount of expansion per degree of workpiece material

The coefficients of expansion and contraction for metals and mixtures are available in the CRC Handbook of Chemistry and Physics, 65th Edition, available from CRC Press Inc., Boca Raton, Florida. Coefficients particularly usable for metals common of employment in both frames of the dimensional measurement device and the workpieces upon which such devices operate are contained at pages D187-D188.

Heat transfer rates of materials are likewise available in the same CRC Handbook of Chemistry and Physics, 65th Edition, at pages E11-E14. Such heat transfer rates are useful in calculating how long it takes the temperature sensors of the temperature-compensated measurement devices in accordance with the present invention to stabilize at a new temperature. These times represent programmed settling times, or time delays, during which the measurement device will not give an indication. Normally these times are only a few seconds. The measuring device in accordance with the present invention is fully self-protected by its programmed operation from attempting temperature-compensated measurement or temperatures that are changing "too fast", i.e., at rates that, in consideration of heat transfer rates, represent that substantial temperature stability has not been achieved. If temperatures of interest are not substantially stable then the measurement device will produce no indication rather than a confusingly wrong, or variable, indication.

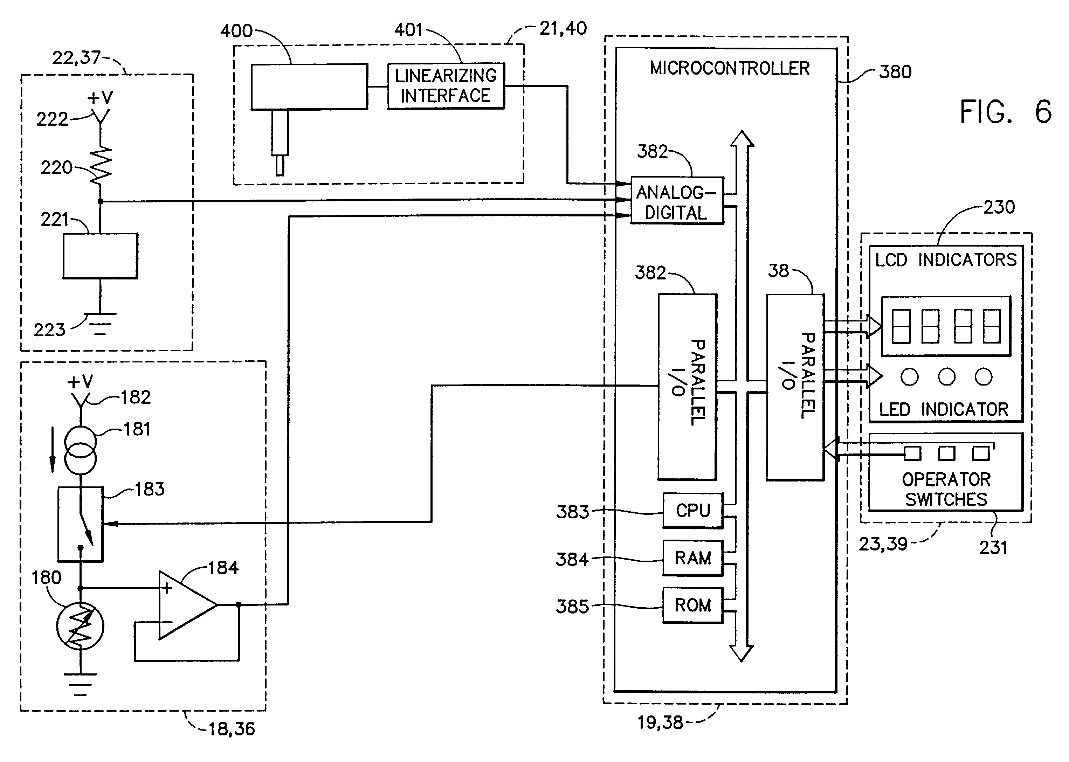

First and second preferred embodiments of electrical circuits suitable for incorporation in the temperature-compensated measuring device in accordance with the present invention are respectively shown in schematic diagram in Figures 5 and 6. Each of the circuits is suitable for inclusion either within the first mechanical embodiment of the temperature-compensated measuring device shown in Figure 1, or within the second embodiment shown in Figures 2a and 2b. The first embodiment of the electrical circuit shown in Figure 5 uses a personal computer 190 as the computer 19 or 38 respectively shown in Figure 1 or Figure 2a. The second embodiment of the electrical circuit shown in Figure 6 uses a smaller microcontroller 380 as the computer 19 or 38 respectively shown in Figure 1 or Figure 2a.

Thus the first embodiment of the electrical circuit shown in Figure 5 may be considered relatively physically larger whereas the second embodiment of the electrical circuit shown in Figure 6 may be considered relatively physically smaller. If the first embodiment of the electrical circuit shown in Figure 5 is to be directly affixed to the frame 11 or base 31 that are respectively shown in Figure 1 or Figure 2a, then the measuring devices 10, 30 must be correspondingly large. It is not, however, necessary that the computers 19, 38 should be respectively physically mounted to the respective frame 11 and base 31. It is merely convenient that the computers 19, 38 should be so mounted, and this mounting is best supported by the miniaturized embodiment of the electrical circuit shown in the schematic diagram of Figure 6.

In the first embodiment of the electrical circuit shown in Figure 5 the measuring assembly 21, 40 includes digital dial gauge 210, preferably Chicago dial type EDI-71 available from Chicago Dial Indicator Company, 1372 Rediker Road, DePlanes, Illinois 60016. The digital dial gauge 210 is connected to a dial gauge to RS232 interface 211. The interface 211 is preferably type Fowler Gage Port available from Observational Systems, Inc., 15014 N.E. 40th, Suite 201-B, Redmond, Washington 98052. Other measuring assemblies 21,40 producing a digital signal output indicative of the measured dimension are known in the industry, and will suffice within the temperature-compensated measuring devices of the present invention.

The signal output from interface 211 is received at an RS232C interface card 191 within personal computer 190. The information contained within the signal is the measured dimension of the workpieces 100, 101 (shown in Figure 1 and Figure 2a).

The frame, or base, temperature sensors 22, 37 (shown in Figures 1, 2a) are preferably implemented as active semiconductor circuits based on semiconductor temperature sensors. Such circuits and sensors have a rapid response time, and are highly sensitive to temperature variations. A resistor 220, nominally 10k ohms, is connected in series with semiconductor temperature sensor 221, nominally type LM335 available from National Semiconductor, between voltage supply 222, typically +12 volts dc, and ground 223. The signal derived at the junction of this voltage divider is received and amplified by operational amplifier 224. The amplified analog signal, indicative of the temperature of the frame 11 or of base 31 (respectively shown in Figures 1, 2a) is received at analog to digital converter 192 within personal computer 190.

The frame, or base, temperature sensors 18, 36 are typically implemented as a thermistor 180. The thermistor 180, typically type DC95 F502 W available from Thermometrics, 808 U.S. Highway 1, Edison, New Jersey 08817 has a wide operational temperature range. It is durable to shock, vibration, and high temperature gradients normally encountered during operational use. Many additional commonly known thermistors are also suitable.

The thermistor 180 is within a constant current circuit of .1 milliamps established by constant current source 181. The constant current source 181 is powered by supply voltage 182, typically +12 volts dc. The circuit between constant current source 181 and thermistor 180 is enabled to be closed by a signal driven from personal computer 190 to close analog switch 183. Analog switch 183 is typically one leg of a CMOS switch type CD4066 (an industry standard part). The signal causing closing of the switch 183 is driven from the digital output lines circuit 193 within personal computer 190. When the switch 183 is enabled to be closed then the variable voltage developed across the variable resistance of thermistor 180 by the constant current flow (.1 milliamps) therethrough is amplified in operational amplifier 184. The amplified signal is communicated to analog to digital interface 192 of personal computer 190. This signal bears information on the temperature of the workpiece.

From the received workpiece and frame (or base) temperatures, and in consideration of preprogrammed thermal coefficients of expansion as respectively besuit the material of the frame (or base) and the material of the workpiece, the personal computer 190 is able to calculate the workpiece- and frame (or base)-compensated-measurement of the workpieces 100, 101. The temperature-compensated dimensional measurement is displayed within display 230 of display and control 23, 39. The operator may cause the personal computer 190 to initiate a measurement cycle, alter the parameters of calculation, or perform other pertinent control via control area 231, typically a computer keyboard.

The second embodiment of an electrical circuit suitable for use within either embodiment of the temperature-compensated measuring devices 10, 30 in accordance with the present invention is shown in Figure 6. This circuit operates similarly to the embodiment of Figure 5. The dimensional measuring assembly 21, 40 typically consists of displacement gauge 400 connected to a linearizing interface 401. The gauge 400 and linearizing interface 401 are both available from Technetics, Inc., 481 Cypress Lane, E1 Cajon, California 92020. Unlike the digital dial gauge 210 and its accompanying dial gauge to RS232C interface 211 that were within the first embodiment of the electrical circuit shown in Figure 5, the signal output of the linearizing interface 401 is analog, and not digital. This signal output is received within an analog to digital converter 381 that is integral to microcontroller 380. The microcontroller 380 is preferably type 68705 or 68HC11 available from Motorola, Inc.

The frame temperature sensor 22, 37 is again based on a semiconductor temperature sensor 221 type LM335. The operational amplifier 224 that was shown in Figure 5 is not necessary for amplification of the electrical signal derived from sensor 221 during the signal transmission to microcontroller 380 because the microcontroller 380 is normally located physically proximate to the frame (or base) temperature sensors 22, 37.

The workpiece temperature sensor 18, 36, consist of the identical components 180-184 as were present within such workpiece temperature sensor within the first embodiment of the electrical circuit shown in Figure 5. The signal output controlling the CMOS analog switch 183 is now derived from the parallel I/O section 382 of microcontroller 380. The microcontroller 380 additionally contains central processing unit section CPU 383, erasable random access memory section RAM 384, and permanent random access memory section ROM 385.

In consideration of preprogrammed information regarding the thermal coefficients of expansion of both the frame (or base) 11, 31 and the workpieces 100, 101 (shown in Figures 1, 2a), and in further knowledge of the workpiece dimension and the frame and workpiece temperatures, the microcontroller 380 calculates the frame- and workpiece-compensated dimensional measurement. This measurement is transferred via parallel I/O 386 to display and control section 23, 39.

Within the miniaturized embodiment of the electrical circuit shown in Figure 6, the display 230 preferably consists both of LCD indicators that are typically used for numerical display and of LED indicators that are typically used for display of the operational status of the temperature-compensated measuring device. The control of the temperature-measuring devices 10, 30 is preferably enabled through simple operator switches 231.

In operational calibration and use, the temperature-compensated measuring devices in accordance with the present invention exhibit considerable flexibility. That a measuring instrument should be calibratable, and calibrated, by such means as the micrometric adjustment assembly 16 shown in Figure 1, is not new in the art. The temperature-compensated measuring devices 10, 30 in accordance with the present invention readily support zeroing or calibration relative to a reference dimensional standard by both mechanical means and by operator-initiated normalization, or zeroing, of the indicated dimension.

An initial, factory, calibration of a temperature-compensated measuring device 10, 30 is undertaken when its frame (or base) 11, 31 is at the 15° reference temperature and the instrument is dimensionally measuring a dimensional standard workpiece 100, 101, or Jo block. The measurement(s) of such dimensional standards are normally traceable to the U.S. National Bureau of Standards, or equivalent foreign authority. Then, while the dimensional measuring instrument is still calibrated, two graphical plots are obtained. A first plot is the change in the absolute measurement of the measuring devices 10, 30 when the temperature of such devices is changed while the temperature of the Jo Block remains fixed at 15°C (59°F). The slope of such a curve is typically only the coefficient of expansion of the frame, or base, 11, 31. A second plot of the measuring devices 10, 30 measurements is obtained while the measuring devices 10, 30 remain calibrated at the 15°C temperature while the Jo block varies in temperature. This variation with temperature exhibited by the Jo block is typically not the same variation as will ultimately be exhibited by the workpiece, being that the Jo block and the workpiece are not required to be made of identical material, and are normally made of different materials.

After deriving the two plots, it is possible to calibrate the temperature-compensated dimensional measuring devices 10, 30 in accordance with the present invention to the original calibration Jo blocks when either (i) the temperature-compensated measuring device, (ii) the Jo block, or (iii) both the temperature-compensated measuring device and the Jo block are not at the 15°C reference temperature. This calibration flexibility is extremely valuable. For example, a temperature-compensated measuring device in accordance with the present invention may typically be switch controlled to indicate its own sensed temperature, the sensed temperature of the workpiece Jo block, or the uncompensated measurement that it currently senses. Suppose it is known from the calibration curves that a Jo block of diameter 15.2410 cm (6.0004 inches) at 15°C (59°F) will measure 15.2428 cm (6.0011 inches) at 21°C (70°F). Suppose that it is also known that a temperature-compensated measuring device 10, 30 that is zeroed to read the 15°C Jo block to be 15.2410 cm (6.0004 inches) when the measuring device 10, 30 is at the same 15°C temperature will measure the same 15°C Jo block to be 15.2390 cm (5.9996 inches) when the frame (or base) 11, 31 of the measuring device 10, 30 is at 23°C (73°F).

Consider now the calibration procedure for a temperature-compensated measuring device when its own sensors indicate that a Jo block is at 21°C (70°F) and that its own frame is at 23°C (73°F). The temperature of the Jo block indicates that the correct reading should be .0178 mm (.0007 inches) high, whereas the temperature of the frame (or base) indicates that the reading should be .0203 mm (.0008 inches) low. The net of these two pieces of information is that a 23°C (73°F) temperature-compensated measuring device measuring at 21°C (70°F) Jo block (which Jo block is 15.2410 cm (6.0004 inches) at 15°C or 59°F) should read, if calibrated, 15.2413 cm (6.0005 inches). Suppose then, upon a singular instance, the temperature-compensated measuring device 10, 30 in accordance with the present invention shows an uncompensated dimensional measurement of the Jo block equaling 15.2415 cm (6.0006 inches). This reading is too high by .00254 mm (.0001 inches). The device is correspondingly manually calibrated, either by mechanical adjustment or by input of parameters to the computer processor, to subtract .00254 mm (.0001 inches) from the workpiece Jo block measurement that it senses. The device 10, 30 thusly thinks that it sees, and displays as the uncompensated measurement, a dimension or 15.2413 cm (6.005 inches) for a 21°C (70°F) Jo block and a 23°C (73°F) frame. From this uncompensated measurement the device will derive a workpiece- and self-temperature compensated measurement of 15.2410 cm (6.0004 inches) -- which is the true Jo block measurement.

The temperature-compensated dimensional measuring device was calibrated without necessity of having adjusted either its own temperature, or the temperature of the Jo block, to the reference temperature of 15°C (59°F). This flexible calibration obviously saves time and permits a frequent recalibration in the work environment.

The present invention is also directed to conveniently displaying in-tolerance/out-of-tolerance determinations made responsive to quantitative dimensional measurements, as well as the quantitative dimensional measurement themselves. The dimensional measurements for which the in-tolerance/out-of-tolerance determinations are made are preferably temperature-compensated measurements in accordance with the present invention, but need not be so.

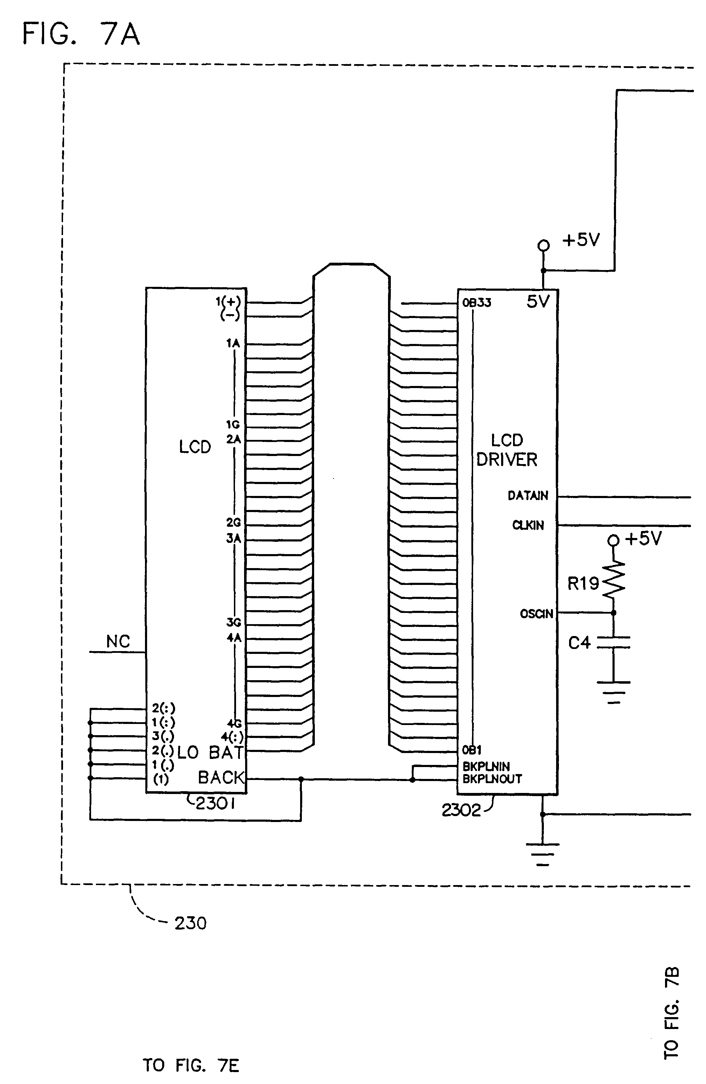

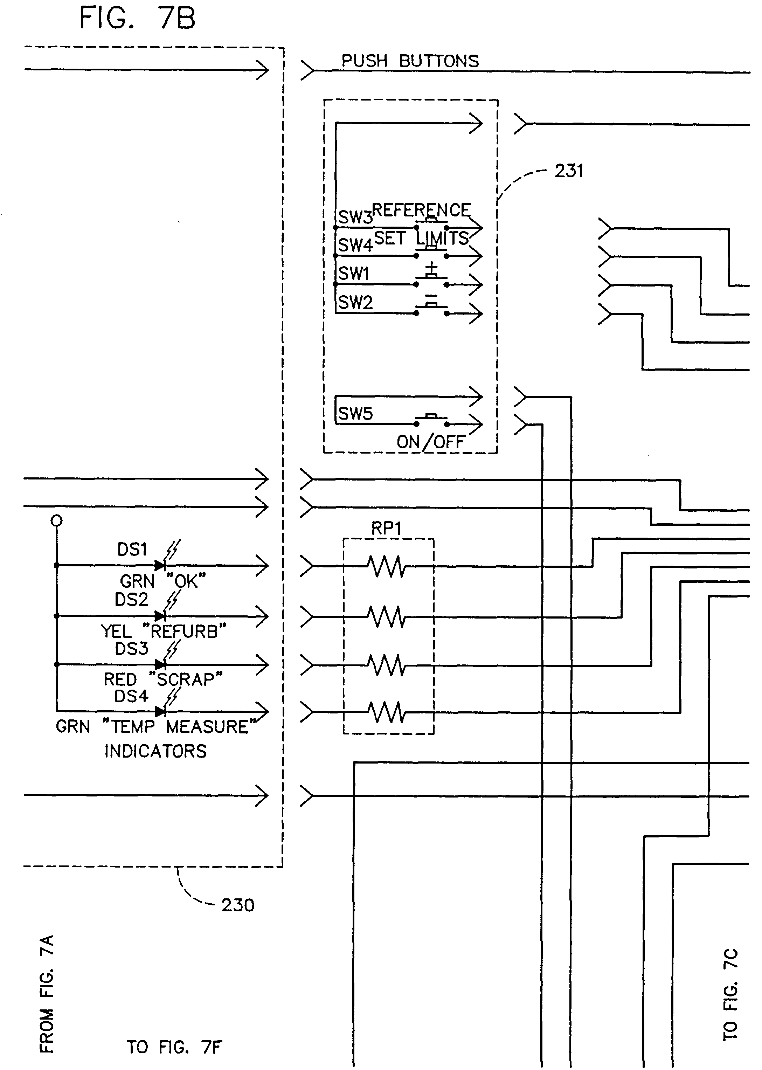

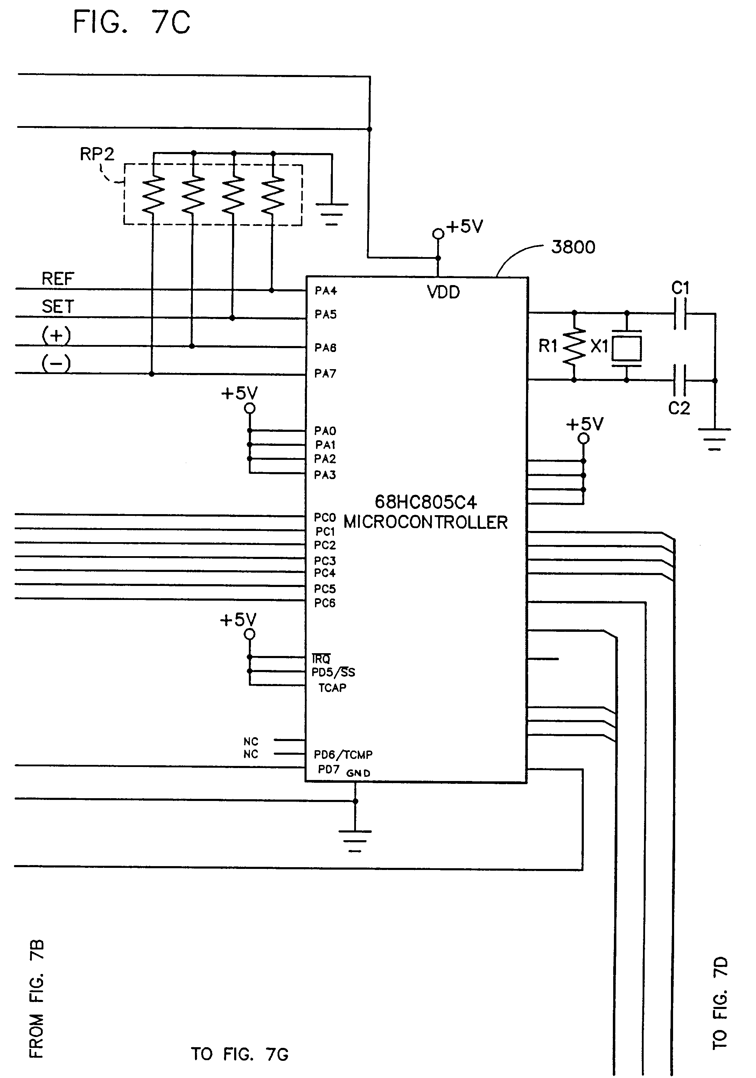

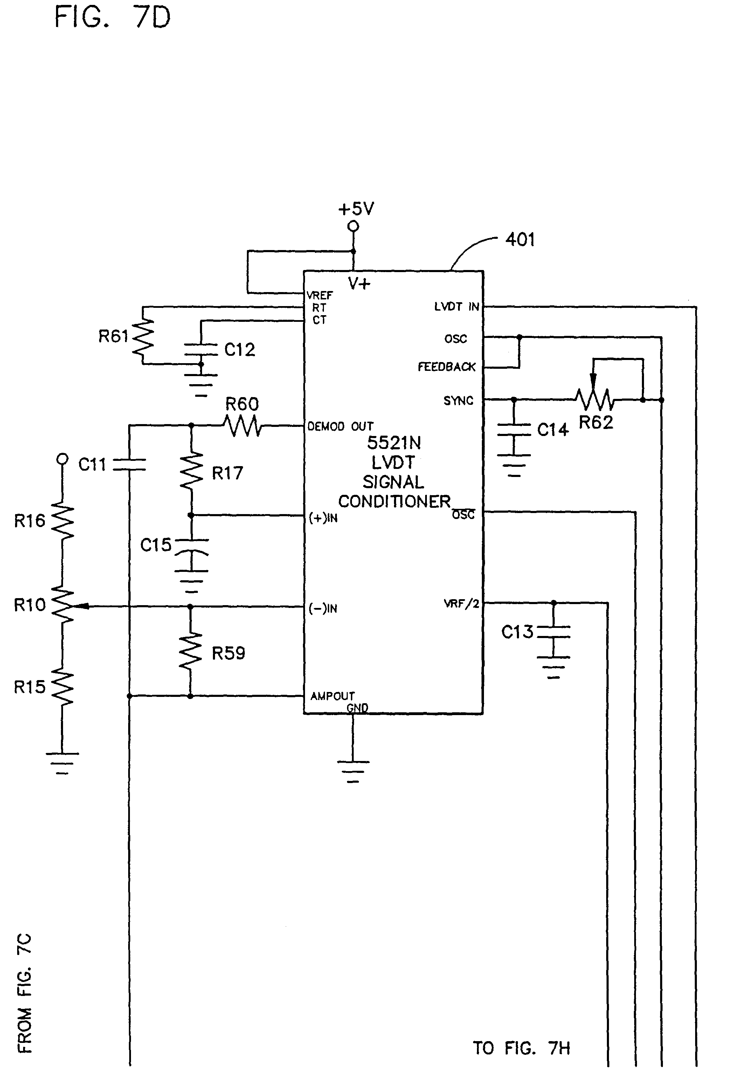

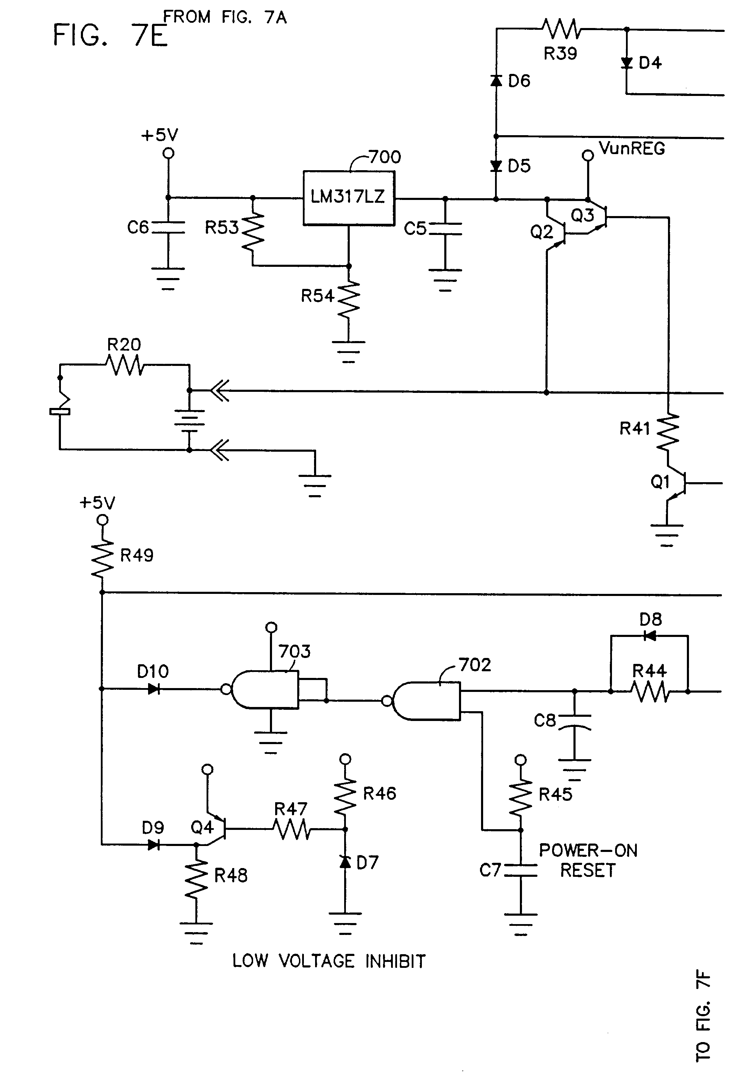

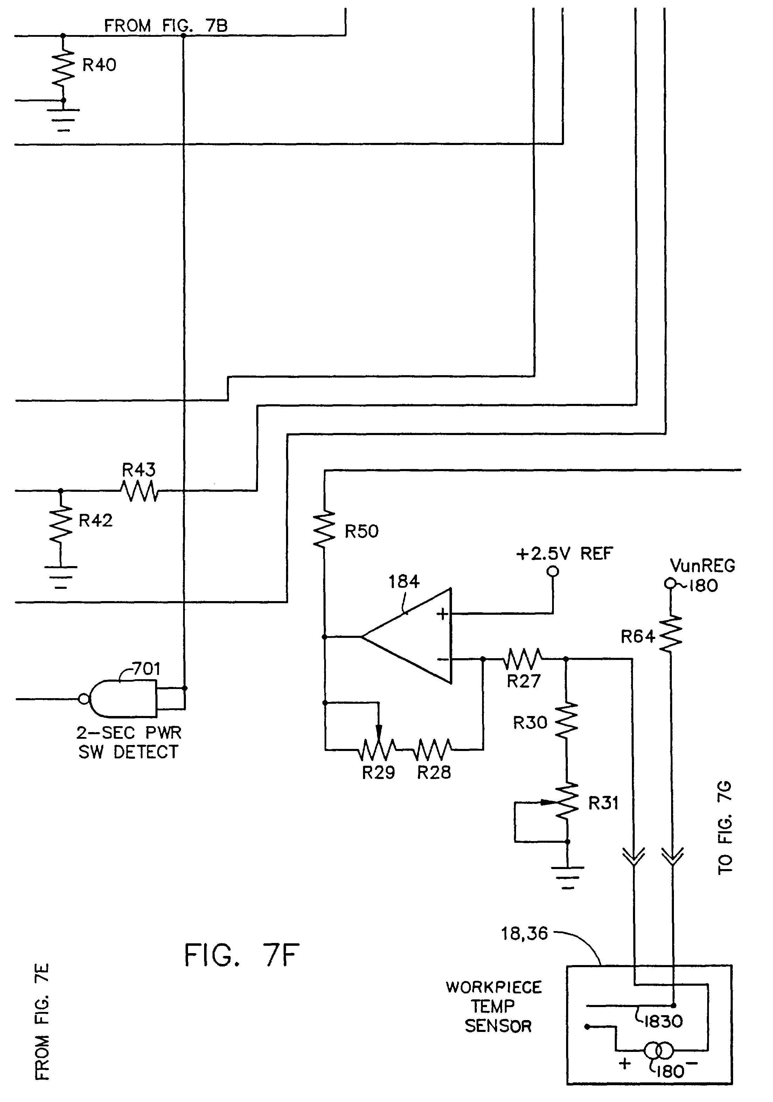

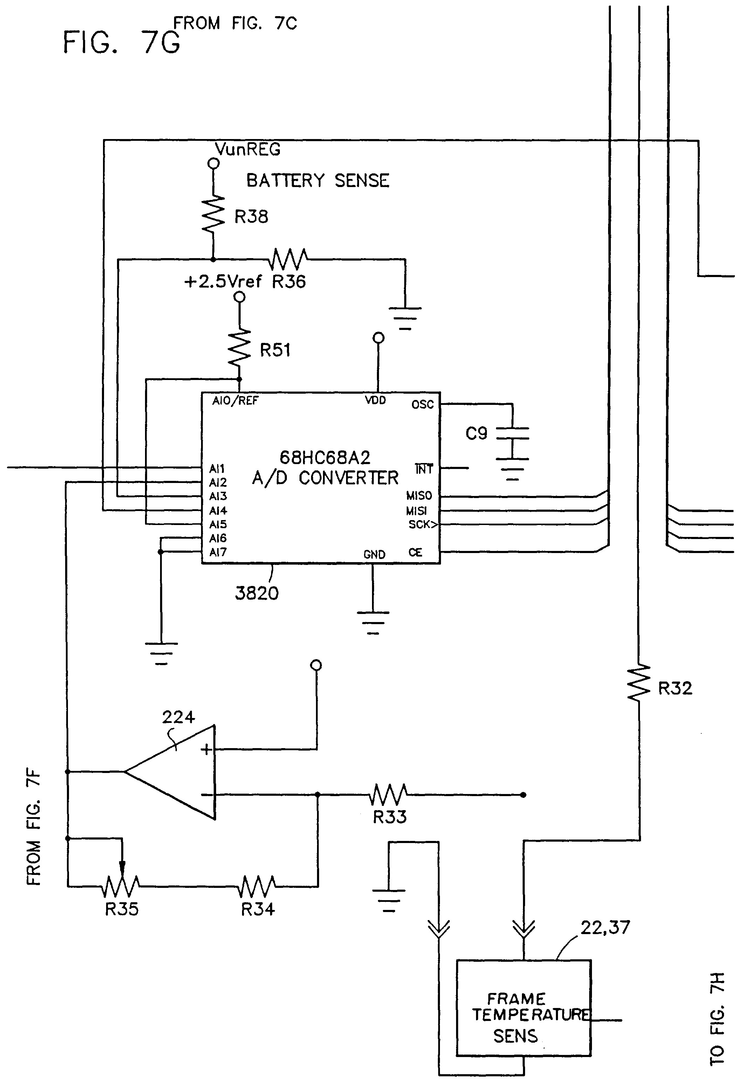

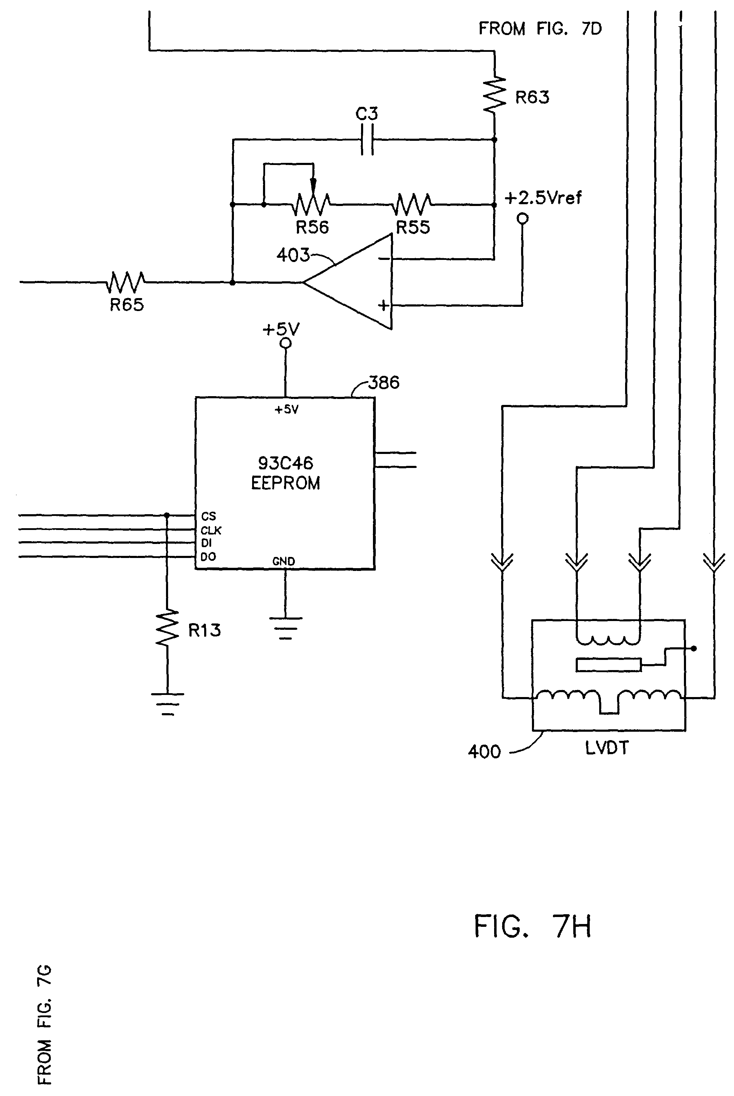

A detail schematic diagram, showing the second embodiment of an electrical circuit previously seen in the schematic block diagram of Figure 6, is shown in Figure 7, consisting of Figure 7a through Figure 7d, in order that the operator switches 231, and the display 230, may be shown with greater particularity. The variant embodiment schematically diagrammed in Figure 7 is different from the embodiment schematically block diagrammed in Figure 6 primarily for using a MICROCONTROLLER 3800 that is of Type 68HC805C4, and which correspondingly does not have an included analog to digital converter. Instead, the analog-digital converter 382 which was within the microcontroller 380 shown in Figure 6 is instead a separate component, A/D CONVERTER 3820 shown in Figure 7. There is no essential difference between the embodiments schematically diagrammed in Figure 6 and Figure 7 and their accompanying firmware control program as regard their ability to temperature compensate dimensional measurement, and to both quantitatively and qualitatively (in-tolerance/out-of-tolerance) display the results thereof.

Referring to Figure 7, the dimensional measuring assembly again consists of displacement gauge 400, preferably a linear variable displacement transducer (LVDT), normally type 0272-000 commercially available from Trans-Tech Corporation. The displacement signal developed in the LVDT displacement gauge 400 is received at linearizing interface and LVDT signal conditioner 401, circuit type NE 5521N available from Signetics Corporation. The linearized and condition signal output from linearizing interface 401 is routed through operational amplifier 403, typically one of four CMOS operational amplifiers type LMC 660XX available from National Semiconductor Corporation, to be received at 10 bit A/D CONVERTER 3820, typically type CDP68HC68AZ available from CMOS Peripherals, Inc.

Continuing in Figure 7, the FRAME TEMPERATURE SENSOR 22, 37, is, as previously shown in Figure 6, again preferably based on part no. LM 335 available from National Semiconductor Corporation. The analog signal output of the sensor is amplified in operational amplifier 224, another part of the CMOS quad operational amplifier part no. LMC 660XX available from National Semiconductor Corporation, and received is into A/D CONVERTER 3820.

The WORKPIECE TEMPERATURE SENSOR 18, 36, is likewise again preferably based on a temperature transducer, preferably part no. AD 590 available from Analog Devices. The signal output of this WORKPIECE TEMPERATURE SENSOR 18, 36 is amplified in operational amplifier 184, still another quarter of the CMOS quad operational amplifier NSC part no. LMC 660XX, and received into A/D CONVERTER 3820. The WORKPIECE TEMPERATURE SENSOR 18,36 contains a switch 1830 that activates the sensor 180 from voltage supply V_{unREG} only when it is properly contacting the workpiece, normally by being pressed tightly against an axle. As such the operation of switch 1830 differs slightly from the operation of switch 183 that was previously shown in Figure 6, and that was explained in conjunction therewith.

The unregulated battery voltage VunREG and the reference voltage +2.5 Vref are also received into A/D CONVERTER 3820 as voltages indicative of the battery, and regulated, power of the dimensional measuring assembly.

The MICROCONTROLLER 3800, typically 8 bit type MC68HC805C4 available from Motorola, Inc., operates in accordance with a firmware program stored in EEPROM 386, preferably type no. 93C46 available from International CMOS Technologies, Inc. In accordance with its programmed operations, the MICROCONTROLLER 3800 causes the A/D CONVERTER 3820 to select among the various analog signals that it receives, and in turn receives the digital data from A/D CONVERTER 3820 that is indicative of the selected informational quantity. The MICROCONTROLLER 3800 runs the algorithm, previously explained, by which the dimensional measurement ultimately derived from LVDT displacement gauge 400 is compensated for both the temperature of the workpiece and the temperature of the gauge.

In addition to its temperature compensation function, the MICROCONTROLLER 3800 is operative, under firmware program control, to both receive control from manual pushbutton switches 231, and to produce both (i) quantitative displays and (ii) go/no-go indications in the form of indicator lights. Manual actuations of the switches 1 through 4, SW1 through SW4, of the operator switches 231 are received directly at MICROCONTROLLER 3800. These switches SW1-SW4 are labeled, and their actuations respectively indicate, an input of "+", "-", "REFERENCE", and "SET LIMITS" to the MICROCONTROLLER 3800. The meaning of these particular inputs will be explained shortly during discussion of the functional performance of the in-tolerance/out-of-tolerance indicating device in accordance with the present invention operating under control of MICROCONTROLLER 3800.

A final one of the operator switches 231, switch SW5 for "ON/OFF", connects through a level converter and switch debouncer circuit to selectively enable or disable adjustable voltage regulator and power supply circuit 700, type LM 317L available from National Semiconductor Corporation, and associated components. The adjustable regulator and power supply 700 produces the +5 v.d.c. power that is used by all electronics. The fundamental power is provided by pluggable battery BT1, typically 7.2 v.d.c. Actuation of the "on/off" switch SW5 also acts in NAND Schmitt Triggers 701, 702, 703, typically types MC 14093B available from Motorola, Inc., to, after a two second power switch detection delay, produce a power-on reset signal that will, save that circuit operation be inhibited by the presence of low voltage, serve to reset the MICROCONTROLLER 3800.

Continuing in Figure 7, the firmware program operated by MICROCONTROLLER 3800 produces, as a first portion of display 230, an alphanumeric liquid crystal digital display LCD 2307, type LC 5/3041-300.XX/XX available from Amperex, as driven by LCD driver 2302, type MM5453 available from National Semiconductor. The alphanumeric information displayed by LCD 2301 is the quantitative dimensional measurements, and, at alternative times, messages to the device operator.

Of particular importance to the present invention, the firmware program operated within MICROCONTROLLER 3800 also causes, within the display 230, selected ones of light emitting diode indicators DS1-DS4 to illuminate. The LED DS1 is typically green, and is labeled and indicates "OK". Similarly, the LED DS2 is typically yellow and is labeled "REFURB", meaning that refurbishment is possible. The LED DS3 is typically red, and is labeled "SCRAP", meaning that refurbishment is not possible and that scrappage of the measured workpiece is indicated. Finally, LED DS4 is typically green, and is labeled "TEMP MEASURE". The illumination of this LED indicator DS4 means that the device is performing temperature measurements, and is waiting for a predetermined period to (potentially) allow such measurements to stabilize (if necessary).

In general within the schematic diagram of Figure 7, all resistors are 1%, 1/4 watt, unless otherwise noted. The indicated capacitor values are in microfarads, unless otherwise noted. Preferred component types and values are as follows:

| Resistors (1%, 1/4 watt), 47 qty: | | | | | | | | | |
|---|---|---|---|---|---|---|---|---|---|
| R1 | 10M | R16 | 10K | R31 | 2K ADJ | R46 | 10K | R61 | 18K |
| R2 | - | R17 | 5.1K | R32 | - | R47 | 5K | R62 | 20K ADJ |
| R3 | - | R18 | - | R33 | 10K | R48 | 10K | R63 | 1K |
| R4 | - | R19 | 1M | R34 | 270K | R49 | 100K | R64 | 100 |
| R5 | - | R20 | 30(1W) | R35 | 50K ADJ | R50 | 10K | R65 | 10K |
| R6 | - | R21 | - | R36 | 10K | R51 | 10K | | |
| R7 | - | R22 | - | R37 | - | R52 | 10K | RP1 | 330 |
| R8 | - | R23 | 20K | R38 | 20K | R53 | 576 | RP2 | 10K |
| R9 | - | R24 | 120K | R39 | 10K | R54 | 1.74K | | |
| R10 | 1K | R25 | 120K | R40 | 100K | R55 | 12.7K | | |
| R11 | - | R26 | 20K ADJ | R41 | 20K | R56 | 2K ADJ | | |
| R12 | - | R27 | 100K | R42 | 20K | R57 | - | | |
| R13 | 10K | R28 | 270K | R43 | 20K | R58 | - | | |
| R14 | | R29 | 50K ADJ | R44 | 1M | R59 | 5K | | |
| R15 | 10K | R30 | 8.2K | R45 | 1M | R60 | 1K | | |

| Capacitors (in microfarads), 14 qty: | | | |
|---|---|---|---|
| C1&2 | 20 pF | C9 | 120 pF |
| C3 | 0.1 | C10 | |
| C4 | 470 pF | C11 | .47 |
| C5 | 20 | C12 | .0041 |
| C6 | 100 | C13&15 | 1.0 |
| C7 | .01 | C14 | .002 |
| C8 | 2.0 | | |

| Diodes, 7 qty: | |
|---|---|
| D4 | in 34K |
| D5 | |
| D6 | |
| D8 | in 4148 |
| D9 | |
| D10 | |
| D7 | 4v zener |

| Transistors, 4 qty: | |
|---|---|
| Q1 | MPS6515 |
| Q2 | |
| Q3 | MPS 6523 |
| Q4 | |

The voltages produced by the two temperature sensors are scaled so that each deviation of 1°K or C temperature output from A/D CONVERTER 3820 is equal to -30 mV. The temperature voltages are balanced so that a temperature of 250°K = -23°C produces a signal output of 2.5 v.d.c. Meanwhile, a temperature reading of -13°C produces an equivalent signal output of 2.2 v.d.c., a temperature of 0°C produces a signal output of 1.81 v.d.c., and a temperature of 60.3°C produces a signal output of 0 v.d.c.

The LVDT sensor of the displacement gauge 400 is also scaled to the A/D CONVERTER 3820, and thus to the MICROCONTROLLER 3800. This scaling is accomplished under control of the firmware program resident with the EEPROM 386 and executed by MICROCONTROLLER 3800. The scaling of the LVDT of the displacement gauge 400 is factory preset to cover a range of -.650 to +.648 mm (-25.6 to +25.5 mils); -.325 to +.323 mm (-12.8 to +12.7 mils); or -.163 to +.160 mm (-6.4 to +6.3 mils). The preset range to which the LVDT is scaled is obviously a function of the deviation to be expected in the workpieces which are being quantitatively dimensionally measured.

The device in accordance with the present invention may be used, for example, for quantitatively measuring railroad axles, and for classifying them in accordance with their measurements into acceptable, refurbishable, and scrap categories. As such, the device functions equivalently to a conventional snap gauge. However, one advantage of the device in accordance with the present invention is that it also takes into account temperature, and hence may be used to measure axles without requiring that they be brought to a known reference temperature. A further advantage of the device in accordance with the present invention is that it directly indicates whether a measurement is within, or without, a measurement tolerance range, simplifying determinations when the device is used by unskilled or inattentive personnel, and reducing error.

In normal use an On/Off button is pushed to switch the device on. The same On/Off button is pushed to turn the device off. Alternatively, the device will switch itself off if it is not used to measure anything for a time duration longer than approximately one minute.

In normal use, the operator is concerned with two main modes of operation. One of these modes is the "Reference" mode. In this mode a reference axle is measured in order to define the gauge's "zero" point. After taking this reference, the gauge reverts to its normal, "Measure", mode that is used for measuring test axles.

There are two other modes which are used infrequently. A "Parameter Mode" is used to set certain limits and constants, such as the ranges for Accept/Refurbish/Scrap, and so on. A "Diagnostic Mode" is used if it is necessary to test the gauge itself.

When first switched on, the device in accordance with the present invention assumes that it will be measuring a workpiece, and compares the workpiece measurement to the reference measurement. Whenever a reference is measured then that measurement is remembered, even if the instrument is subsequently switched off.

The device contains a switch which allows it to detect when the temperature measuring foot (the middle foot) is properly contacting the axle. If the device is not properly engaged then three things happen: The "axle engaged" light will not be lit, the numeric display reads an uncompensated displacement (which is usually not a useful figure), and the three OK/REFURB/SCRAP lights will not operate.

In this case, all that is necessary is to move the device into the proper position on the axle with slight pressure, and the "TEMP MEASURE" light will illuminate to confirm proper seating.

To measure a reference in reference mode the device is first positioned on a standard reference gauge block so that the "TEMP MEASURE" light comes on. The "Ref" key is then pressed. The display will read "rEF". When ready, the operator presses the Ref button again. The display now alternates between "hold" and a count showing approximate seconds remaining until the device considers the temperature to be stable.

When the reference measurement is locked in, the device automatically reverts to "Measure" mode, and will initially indicate 0.000 mm ± 0.001 (000.0 mils +/-0.1). This, of course, indicates that the reference gauge block is the same size as itself.

The time required to stabilize is a function of a given workpiece, and is empirically determined. As will shortly be discussed, this stabilization time can be manually entered into the device.

To measure a workpiece in "Measure" mode the device is simply turned on. The device will start in the "Measure" mode, and will revert to this mode after measuring a reference gauge block. In other words, the "Measure" mode might be considered "normal" mode. In order to measure a workpiece such as an axle, the device is placed on the test axle so that the "TEMP MEASURE" light comes on.

The device may indicate the measurement immediately, and activate one of the OK/REFURB/SCRAP lights. However, if the axle temperature is substantially different from whatever the device was previously touching, there will be a short wait while the temperature is measured. During this waiting period the display will flash between the present reading and a number indicating minimum seconds remaining before the temperature reading will be stable enough to judge the OK/REFURB/SCRAP condition.

If the device is repositioned within a short time of a measurement then it will continue to measure smoothly. However, if it is removed from the axle for a longer period, when it is remounted it will wait to ensure that the temperature measurement is stable. This "Repeat-Measure-OK" time period is preset to 5 seconds, but it is one of the adjustable parameters which can be changed if desired.

There are a number of parameters in the device that may be set up or adjusted. These are described in the list below. The procedure for setting a parameter involves two steps; first select the parameter, then increase or decrease the value.

To start set parameters, the following procedure is followed. With the device already switched on the SET LIMITS key is pressed. The display will read "P" followed by a parameter number. this number can be increased or decreased to select the desired parameter number by using the + and - keys. The "SET LIMITS" key is then depressed again to actually select the particular parameter that is desired to be modified.

The parameters are shown in Table 1, below. The present value of the parameter will be shown. This value can be increased or decreased with the "+" and *"-"* keys. To finish setting a parameter, the "SET LIMITS" key is pressed. The device returns the P-number display, allowing the operator to select another parameter by repeating previous steps. To finish setting parameters altogether, the "REFERENCE" key is pressed one last time. This returns the device to normal "Measure" Mode.

**Table 1.**

| Device Adjustable Parameters | |
|---|---|
| Parameter # | Parameter Meaning |
| 0 | Maximum temp fluctuation allowed in temperature-stable wait period, from 0.1 °C to 10°C. |
| 1 | "Good" grade maximum positive tolerance, 0.0 to .254 mm (10 mil). (d_{UprTol}) |
| 2 | "Good" grade maximum negative tolerance, -0.0 to -.254 mm (-10 mil). (d_{LwrTol}) |
| 3 | "Refurb" grade maximum positive tolerance, 0.0 to .254 mm (10 mil). (d_{UprRfb}) |
| 3 | "Refurb" grade maximum negative tolerance, -0.0 to -.254 mm (-10 mil). (d_{LwrRfb}) |
| 5 | Low battery trigger point (this is in A/D counts). |
| 6 | Handle temperature coefficient (in units of 2.54 mm/°C (0.1 micro-inch/°C), range 1024 to 2047) |
| 7 | Axle temperature coefficient (in units of 2.54 mm/°C (0.1 micro-inch/°C), range 512 to 1023) |
| 8 | Minimum wait for temperature stabilization, in seconds, 2 corresponds to 1 second, 3 is 2 seconds, and so on. |
| 9 | Displacement sensor range, |
| | 0 means -.650 to +.648 mm (-25.6 to +25.5 mil) |
| | 1 means -.325 to +.323 mm (-12.8 to +12.7 mil) |
| | 2 means -.163 to +.160 mm (-6.4 to + 6.3 mil). |
| | This is a factory adjustment since it requires a corresponding change of the internal circuitry. |
| 10 | English/Metric readout. 0 means English (mils), 1 means metric (mm). Note that this changes only the readout. The parameters must still be entered in the units shown in this table. The "Measure Mode" the present units are indicated by the position of the decimal point. |
| 11 | Repeat-Measure-OK timer period. (Factory set to 5 secs) |

A function is included to reset all parameters to "factory" values. This function is useful if the parameters get to a disorderly state as a result of too much manipulation. It may then be easier to reset the parameters to the "factory" presets, rather than adjust them all individually. To do this, the "SET LIMITS" key is held down while the device is turned on.

Under rare circumstances the device may forget its settings. If this happens when the device is powered-on then the display will read "Err". The device must be turned off and switched on again while holding down the "SET LIMITS" key at the same time. This will reset the parameters to the factory values. It is necessary to then reset any parameters which are desired to be set to other than factory values (see the Parameter-Setting procedure).

The device also supports a number of diagnostic functions. These functions are handy for verifying that independent parts of the device are working. To enter "Diagnostic" mode the following procedure is followed. The device is turned off. The "REFERENCE" key is held down. The "On" key is then pressed and released. The "REFERENCE" key is continually held until the display reads "Sel". The "+" or "-" keys are then depressed to advance to the code of interest. The possible choices are shown in the following Table 2.

**Table 2.**

| Diagnostic Modes | |
|---|---|
| Displacement | Display Reads |
| Axle temp | AXLe AHLE |
| Handle temp | hAnd |
| Battery | bAtt |
| Displacement | dISP |

When the desired function is reached then the "SET LIMITS" key is pushed.

The Axle (workpiece) and Handle (device) temperature diagnostic mode shows a readout in degrees C. In fact, the indicated temperature is only accurate to about 3 to 5 degrees, although the changes in temperature (which is what the device is interested in) are registered to about +/-.2 degrees.

The displacement diagnostic mode shows the raw dimensional measurement from the displacement sensor. This is actually identical to the readout when the "TEMP MEASURE" light is not on.

The Battery diagnostic mode shows the raw A/D count for the battery voltage.

To quit the diagnostics the device is turned off, and started again.

Considering the overall operation of the device in accordance with the present invention in mathematical terms, the reference dimension is variably predetermined to be D_{Ref} by placing the instrument on a dimensional standard. An upper tolerance limit above D_{Ref}, or d_{UprTol}, and a lower tolerance limit below D_{Ref}, or d_{LwrTol}, are manually specified. An actual dimensional measurement D_{Actual} of workpiece is within tolerance if:${\text{D}}_{\text{Ref}} {\text{- d}}_{\text{LwrTol}} {\text{≤ D}}_{\text{Actual}} {\text{≤ D}}_{\text{Ref}} {\text{+ d}}_{\text{UprTol}}$

Represented on a scale line, this relationship is 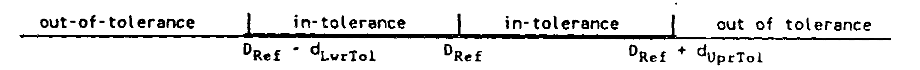 when the in-tolerance region is diagrammatically represented in double line.

Furthermore, a refurbishment, or repair, tolerance is preferably also manually specifiable. Both a lower refurbishment tolerance, d_{UprRfb}, and an upper refurbishment tolerance, d_{UprRfb}, are preferably individually specifiable. The refurbishment tolerances are broader than the regular, acceptance tolerances, i.e.:${\text{d}}_{\text{LwrRfb}} {\text{≥ d}}_{\text{LwrTol}}$${\text{d}}_{\text{UprRfb}} {\text{≥ d}}_{\text{UprTol}}$ An actual dimensional measurement D_{Actual} of a workpiece is within refurbishment range if:${\text{D}}_{\text{Ref}} {\text{- d}}_{\text{LwrRfb}} {\text{≤ D}}_{\text{Actual}} {\text{< D}}_{\text{Ref}} {\text{- d}}_{\text{LwrTol}}$ or${\text{D}}_{\text{Ref}} {\text{+ d}}_{\text{UprTol}} {\text{< D}}_{\text{Actual}} {\text{< D}}_{\text{Ref}} {\text{+ d}}_{\text{UprRfb}}$

Represented as a scale line, this relationship is as follows: 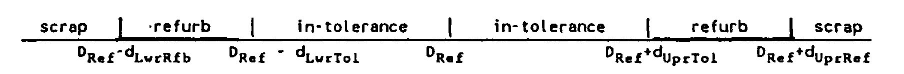 when the refurbishment regions are diagrammatically represented in double line.

In accordance with the present invention, the dimensional measurements D_{Ref} and D_{Actual} are each temperature compensated. In mathematical terms:${\text{D}}_{\text{Ref}} {\text{= G}}_{\text{Std}} {\text{+ (T}}_{\text{Ref}} {\text{- T}}_{\text{Std}} {\text{) x X}}_{\text{Std}} {\text{- (T}}_{\text{Ref}} {\text{- T}}_{\text{GStd}} {\text{) x X}}_{\text{Gage}}$ where the expressions have the same meaning as before with T_{Ref} being the predetermined reference temperature, for example 15°C (59°F), and X_{Std} being the amount of expansion per degree of the material of the gauge block standard. It may thusly be noted that the reference dimension, D_{Ref}, to which the actual dimension, D_{Actual}, will be compared is itself temperature-compensated. Accordingly, it is not necessary to calibrate the device of the present invention to a gauge block reference standard that is at a predetermined reference temperature, but only to such a gauge block reference standard at any convenient temperature.

Similarly, the workpiece dimensional measurement is expressed as:${\text{D}}_{\text{Actual}} {\text{= G}}_{\text{Wkpc}} {\text{+ (T}}_{\text{Std}} {\text{- T}}_{\text{Wkpc}} {\text{) x X}}_{\text{Wkpc}} {\text{- (T}}_{\text{GStd}} {\text{- T}}_{\text{GWkpc}} {\text{) x X}}_{\text{Gage}}$ where the terms have the same meaning as before.

In accordance with the preceding discussion, it should be recognized that many alterations and adaptations of the temperature-compensated measuring devices in accordance with the present invention are possible. If dimensional sensitivity of the workpiece to variations in temperature is not particularly acute, and/or is accommodated by other means than temperature compensation of dimensional measurements, then it would be possible to operate the device in accordance with the present invention to compensate only for its own frame (or base) temperature. Conversely, if the temperature-compensated dimensional measuring devices in accordance with the present invention are dimensionally so small that their own dimensional variations with temperature are inconsequential, and/or are made out of materials that are highly dimensionally stable with temperature variation, and/or are always operated at an identical temperature, then these devices could be used to compensate only for the temperature of the workpiece and not additionally, as is preferable, for the-temperature measurement of the devices themselves.

As well as the possibility of using the devices of the present invention by parts in a reduction of their preferred capacity, it is obviously possible, once a flexible computational computer is employed, to extend to still other factors the temperature compensation that is employed in accordance with the principles of the present invention. Particularly, compensation for variations with temperature might be employed for more than just the frame (or base), 11, 31 and the workpieces 100, 101. This additional compensation might relate to second order effects, or to the non linearities within the temperature-measuring devices themselves. The computers might be employed not merely to perform calculations as besuit substantially linear coefficients of expansion, but to match indicated temperatures and dimensional measurements against predetermined mappings in order to calculate a best fit of observed conditions to prior data in order to determine true dimensions.

The present invention is also suitable for incorporation within a closed loop control system during machining or other processing operations wherein processing operations are controlled in consideration of workpiece dimension, machine head position, or like dimensional measurements. It will be understood that the compensation performed by the present invention is, under computer control, substantially continuous. The continuous compensation can account for continuing variations in any of the dimension or the temperature of the workpiece, or the temperature of the measuring device.

This suitable expansion of the present invention deserves careful deliberation. For example, when a workpiece is being turned on a lathe the heat generated in the turning process flows in both directions from the cutting tool. The heat which goes toward the already formed part is of no consequence (other than it may act as a thermal barrier to the heat being generated by the cutting tip). The heat contained within the removed shavings is likewise of no consequence. The heat transferred toward the uncut section is of concern because it is expanding the part dimensionally. The cutting tip typically moves parallel to the centerline of the machine. Because of its thermal expansion the part is cut on a taper which is more pronounced the closer to the end of the cut. The reason for this is because the transfer of heat from the metal to the air at the end of the part is significantly slower than internal heat transfer in the metal. If the sensing and compensation in accordance with the present invention are used to move the cutting tool so as to compensate for the heat changes in the material being formed then the end product may be made significantly more dimensionally accurate. In many cases this increase in accuracy would eliminate any requirement(s) for secondary processing. Therefore the expansion of the present invention into active process control systems is contemplated.

In sensing the dimension or temperature of the workpiece it should be understood that such sensing need not be by direct physical contact. Even if the dimension of a workpiece were to be measured relative to a frame by a non-contact method such as reflected light, then the temperature variations of the workpiece could still be pertinent to the determination of the workpiece true dimension. The temperature of a workpiece may be determined by sensing the infrared radiation emissions therefrom, and need not exclusively be determined by physical contact with the workpiece.

## Claims

1. A workpiece-temperature-compensated and self-temperature-compensated measuring device (10, 30) comprising
a gauge frame (11, 31) exhibiting contact with a workpiece (100, 101) at at least three points (13-15; 33-36), the frame exhibiting a first predetermined dimensional sensitivity X_{Gauge} to deviations from a first reference temperature T_{GStd},
an indicator of displacement (21, 40) referenced to the frame (11, 31) and displaced relative thereto by the workpiece (100, 101) for measuring relative to the frame a quantitative dimension G_{Wkpc} of the workpiece, the workpiece exhibiting a second predetermined dimensional sensitivity X_{Wkpc} to deviations from a second reference temperature T_{Std} different from the first reference temperature T_{GStd},
a first temperature sensor (22, 37) in thermal contact with the frame (11, 31) for measuring a first temperature T_{GWkpc} of the frame,
a second temperature sensor (18, 36) held by the frame (11, 31) in thermal contact with the workpiece (100, 101) for measuring a second temperature T_{Wkpc} of the workpiece, and
a computer (19, 38) for receiving the measured workpiece dimension G_{Wkpc}, the measured first temperature T_{GWkpc} and the measured second temperature T_{Wkpc} and for calculating, in consideration of the first and the second predetermined dimensional sensitivies X_{Gauge} and X_{Wkpc} respectively of the frame (11, 31) and of the workpiece (100, 101) to deviations respectively resultant from the first reference temperature T_{GStd} and the second reference temperature T_{Std}, the workpiece-temperature-compensated frame-temperature-compensated quantitative dimension G_{Wkpc} + [(T_{Std}-T_{Wkpc}) x X_{Wkpc}] - [(T_{GStd}-T_{GWkpc}) x X_{Gauge}] that the workpiece (100, 101) would measure if the workpiece and the frame (11, 31) were at their respective reference temperatures T_{Std} and T_{GStd}.

2. The measuring device according to claim 1, wherein the first temperature sensor (22, 37) comprises a semiconductor temperature sensor mounted to the gauge (11, 31).

3. The measuring device according to claim 1, wherein the gauge comprises a three point snap gauge (11) having two fixed shoes (13, 15) and a moveable measuring shoe (14).

4. The measuring device according to claim 3, wherein one (15) of the shoes of the snap gauge (11) holds the second temperature sensor (18) in thermal communication with the workpiece (100).

5. The measuring device according to claim 3, wherein the three-point snap gauge (11) is thermally insulated by an insulator (24) from a human hand by which it is held during use to measure the workpiece (100).

6. The measuring device according to claim 1, wherein the gauge frame comprises a three point rocker gauge (31) placeable within a bore of a workpiece (101) for sensing the dimensions thereof.

7. The measuring device according to claim 6, wherein the three point rocker gauge (31) holds the second temperature sensor (36) in thermal communication with the interior wall of the bore of the workpiece (101).

8. The measuring device according to claim 1, wherein the second temperature sensor (18, 36) comprises a thermistor (54).

9. The measuring device according to claim 1, wherein the second temperature sensor (18, 36) comprises a thermistor (54) mounted to the gauge (11, 31) in a position whereat it must be held in thermal communication with the workpiece (100, 101) when the indicator of displacement (21, 41) is measuring the dimension of the workpiece (100, 101), and is not merely incidentally held in thermal communication with the workpiece by the gauge.

10. The measuring device according to claim 9, wherein the second temperature sensor (18, 36) further comprises a thermal insulating layer (56) between the thermistor (54) and the gauge (11, 31) for reducing heat transfer between (i) the thermally communicating thermistor (54) and the workpiece (100, 101) and (ii) the gauge (11, 31).

11. The measuring device according to claim 9, wherein the second temperature sensor (18, 36) further comprises a thermally conductive pad (53) enhancing the thermal communication of the thermistor (54) with the workpiece (100, 101).

12. The measuring device according to claim 11, wherein the thermally conductive pad (53) comprises metal.

13. The measuring device according to claim 12, wherein the metal comprises silver.

14. The measuring device according to claim 1, wherein the computer (19, 38) comprises a digital computer.

15. The measuring device according to claim 1, further comprising a display (23, 39) for displaying the temperature-normalized dimension of the workpiece (100, 101).

16. The measuring device according to claim 1, further comprising
comparison means (19, 38; 380), receiving the measured dimension from the computer (19, 38), for comparing the measured dimension to a predetermined dimensional tolerance range about a predetermined reference dimension, and
indication means (23, 39; 230), responsive to the comparing of the comparision means, for indicating that, by results of the comparing, the measured dimension is either within or without the dimensional tolerance range.

17. The measuring device according to claim 16, further comprising range initialization means, communicating with the comparison means (19, 38; 380), for variably predetermining the dimensional tolerance range.

18. The measuring device according to claim 17, wherein the initialization means is for separately variably predetermining both upper and lower limits of the dimensional tolerance range.

19. The measuring device according to claim 16, further comprising reference dimension initialization means, communicating with the comparison means (19, 38; 380), for variably predetermining the reference dimension.

## Patentansprüche

1. Werkstück-temperaturkompensierte und selbst-temperaturkompensierte Meßvorrichtung (10, 30), mit
einem Meßgerätrahmen (11, 31), der an wenigstens drei Punkten (13-15; 33-36) mit einem Werkstück (100, 101) in Kontakt kommt, wobei der Rahmen eine erste vorgegebene Abhängigkeit X_{Gauge} der Abmessung von Abweichungen von einer ersten Bezugstemperatur T_{GStd} aufweist,
einem Indikator (21, 40) für eine Verschiebung bezüglich des Rahmens (11, 31), der vom Werkstück (100, 101) relativ dazu verschoben wird, um relativ zum Rahmen eine quantitative Abmessung G_{Wkpc} des Werkstücks zu messen, wobei das Werkstück eine zweite vorgegebene Abhängigkeit X_{Wkpc} der Abmessung von Abweichungen von einer zweiten Bezugstemperatur T_{Std} aufweist, die von der ersten Bezugstemperatur T_{GStd} verschieden ist,
einem ersten Temperatursensor (22, 37), der mit dem Rahmen (11, 31) in thermischem Kontakt steht, um eine erste Temperatur T_{GWkpc} des Rahmens zu messen,
einem zweiten Temperatursensor (18, 36), der vom Rahmen (11, 31) im thermischen Kontakt mit dem Werkstück (100, 101) gehalten wird, um eine zweite Temperatur T_{Wkpc} des Werkstücks zu messen, und mit
einem Computer (19, 38) zum Aufnehmen der gemessenen Werkstückabmessung G_{Wkpc}, der gemessenen ersten Temperatur T_{GWkpc} und der gemessenen zweiten Temperatur T_{Wkpc} und zum Berechnen, unter Berücksichtigung der ersten und der zweiten vorgegebenen Abhängigkeit X_{Gauge} und X_{Wkpc} der Abmessung des Rahmens (11, 31) bzw. des Werkstücks (100, 101) von Abweichungen von der ersten Bezugstemperatur T_{GStd} bzw. der zweiten Bezugstemperatur T_{Std}, der Werkstücktemperatur-kompensierten und Rahmentemperatur-kompensierten quantitativen Abmessung G_{Wkpc} + [(T_{Std}-T_{Wkpc}) x X_{Wkpc}] - [(T_{Gstd}-T_{Gwkpc}) x X_{Gauge}], die das Werkstück (100, 101) zeigen würde, wenn das Werkstück und der Rahmen (11, 31) auf seiner jeweiligen Bezugstemperatur T_{Std} bzw. T_{GStd} wären.

2. Meßvorrichtung nach Anspruch 1, wobei der erste Temperatursensor (22, 37) ein Halbleiter-Temperatursensor ist, der am Meßgerät (11, 31) angebracht ist.

3. Meßvorrichtung nach Anspruch 1, wobei das Meßgerät eine Dreipunkt-Tastlehre (11) mit zwei festen Schuhen (13, 15) und einem beweglichen Meßschuh (14) ist.

4. Meßvorrichtung nach Anspruch 3, wobei einer (15) der Schuhe der Tastlehre (11) den zweiten Temperatursensor (18) im thermischen Kontakt mit dem Werkstück (100) hält.

5. Meßvorrichtung nach Anspruch 3, wobei die Dreipunkt-Tastlehre (11) durch eine Isolierung (24) gegen die menschliche Hand, von der sie beim Gebrauch zum Messen des Werkstücks (100) gehalten wird, thermisch isoliert ist.

6. Meßvorrichtung nach Anspruch 1, wobei der Meßgerätrahmen ein Dreipunkt-Schwenkmeßgerät (31) umfaßt, das in die Bohrung eines Werkstücks (101) eingesetzt werden kann, um deren Abmessungen zu erfassen.

7. Meßvorrichtung nach Anspruch 6, wobei das Dreipunkt-Schwenkmeßgerät (31) den zweiten Temperatursensor (36) in thermischer Verbindung mit der Innenwand der Bohrung des Werkstücks (101) hält.

8. Meßvorrichtung nach Anspruch 1, wobei der zweite Temperatursensor (18, 36) einen Thermistor (54) umfaßt.

9. Meßvorrichtung nach Anspruch 1, wobei der zweite Temperatursensor (18, 36) einen Thermistor (54) umfaßt, der an einer Stelle am Meßgerät (11, 31) angebracht ist, an der er zwangsweise in thermischer Verbindung mit dem Werkstück (100, 101) gehalten wird, wenn der Indikator (21, 41) für die Verschiebung die Abmessung des Werkstücks (100, 101) mißt, und nicht nur zufällig durch das Meßgerät in thermischer Verbindung mit dem Werkstück gehalten wird.

10. Meßvorrichtung nach Anspruch 9, wobei der zweite Temperatursensor (18, 36) eine thermische Isolierschicht (56) zwischen dem Thermistor (54) und dem Meßgerät (11, 31) aufweist, um den Wärmeübergang zwischen (i) dem thermisch leitenden Thermistor (54) und dem Werkstück (100, 101) und (ii) dem Meßgerät (11, 31) zu verringern.

11. Meßvorrichtung nach Anspruch 9, wobei der zweite Temperatursensor (18, 36) eine thermisch leitende Unterlage (53) aufweist, die die thermische Verbindung des Thermistors (54) mit dem Werkstück (100, 101) verbessert.

12. Meßvorrichtung nach Anspruch 11, wobei die thermisch leitende Unterlage (53) aus Metall besteht.

13. Meßvorrichtung nach Anspruch 12, wobei das Metall Silber ist.

14. Meßvorrichtung nach Anspruch 1, wobei der Computer (19, 38) ein digitaler Computer ist.

15. Meßvorrichtung nach Anspruch 1, mit einer Anzeige (23, 39) zum Anzeigen der temperaturnormalisierten Abmessung des Werkstücks (100, 101).

16. Meßvorrichtung nach Anspruch 1, mit
einer Vergleichseinrichtung (19, 38; 380) die die gemessene Abmessung vom Computer (19, 38) erhält, um die gemessene Abmessung mit einem vorgegebenen Abmessungs-Toleranzbereich um eine vorgegebene Bezugsabmessung zu vergleichen, und mit
einer Anzeigeeinrichtung (23, 39; 230), die auf den Vergleich der Vergleichseinrichtung anspricht, um anzuzeigen, daß als Vergleichsergebnis die gemessene Abmessung entweder innerhalb oder außerhalb des Abmessungs-Toleranzbereichs liegt.

17. Meßvorrichtung nach Anspruch 16, mit einer Bereichs-Einstelleinrichtung, die mit der Vergleichseinrichtung (19, 38; 380) in Verbindung steht, damit der Abmessungs-Toleranzbereich variabel vorgegeben werden kann.

18. Meßvorrichtung nach Anspruch 17, wobei die Einstelleinrichtung die separate variable Vorgabe sowohl der oberen als auch der unteren Grenzen des Abmessungs-Toleranzbereichs erlaubt.

19. Meßvorrichtung nach Anspruch 16, mit einer Bezugsabmessungs-Einstelleinrichtung, die mit der Vergleichseinrichtung (19, 38; 380) in Verbindung steht, damit die Bezugsabmessung variabel vorgegeben werden kann.

## Revendications

1. Dispositif de mesure à compensation de température de pièce à usiner et à auto-compensation de température (10, 30) comprenant
. un châssis de calibrage (11, 31) présentant un contact avec un pièce à usiner (100, 101) en trois points au moins (13-15 ; 33-36), châssis présentant une première sensibilité dimensionnelle prédéterminée X_{Calibrage} aux écarts se produisant par rapport à une première température de référence T_{GStd},
. un indicateur de déplacement (21, 40) rapporté au châssis (11, 31) et déplacé par rapport à celui-ci par la pièce (100, 101) pour mesurer par rapport au châssis une dimension quantitative G_{Wkpc} de la pièce, la pièce présentant une seconde sensibilité dimensionnelle prédéterminée X_{Wkpc} aux écarts par rapport à une seconde température de référence T_{Std} différente de la première température de référence T_{Gstd},
. un premier détecteur de température (22, 37) en contact thermique avec le châssis (11, 31) pour la mesure d'une première température T_{GWkpc} du châssis,
. un second détecteur de température (18, 36) maintenu par le châssis (11, 31) en contact thermique avec la pièce (100, 101) pour la mesure d'une seconde température T_{Wkpc} de la pièce, et
. un calculateur (19, 38) destiné à recevoir la cote G_{Wkpc} de la pièce mesurée, la première température mesurée T_{GWkpc} et la seconde température mesurée T_{Wkpc} et à calculer, en tenant compte des première et seconde sensibilités dimensionnelles prédéterminées X_{Calibrage} et X_{Wkpc} respectivement du châssis (11, 31) et de la pièce (100, 101) aux écarts résultant respectivement de la première température de référence T_{Gstd} et de la seconde température de référence T_{Std}, la dimension quantitative à compensation de température de la pièce et à compensation de température du châssis G_{Wkpc} + [(T_{Std} - T_{Wkpc}) x X_{Wkpc}] - [(T_{GStd} - T_{GWkpc}) x X_{Calibrage}] que la pièce (100, 101) mesurerait si la pièce et le châssis (11, 31) étaient à leurs températures de référence respectives T_{Std} et T_{GStd}.

2. Dispositif de mesure selon la revendication 1, dans lequel le premier détecteur de température (22, 37) comprend un détecteur de température à semi-conducteurs monté sur le calibrage (11, 31).

3. Dispositif de mesure selon la revendication 1, dans lequel le calibrage comprend un calibre à mâchoires à trois points (11) ayant deux mâchoires fixes (13, 15) et une mâchoire de mesure mobile (14).

4. Dispositif de mesure selon la revendication 3, dans lequel une (15) des mâchoires du calibre à mâchoires (11) maintient le second détecteur de température (18) en communication thermique avec la pièce (100).

5. Dispositif de mesure selon la revendication 3, dans lequel le calibre à mâchoires à trois points (11) est thermiquement isolé par un isolant (24) de la main de l'opérateur qui le tient lors de l'utilisation pour mesurer la pièce (100).

6. Dispositif de mesure selon la revendication 1, dans lequel le châssis de calibrage comprend un calibre oscillant à trois points (31) pouvant être placé dans un alésage d'une pièce (101) pour lire les cotes de celle-ci.

7. Dispositif de mesure selon la revendication 6, dans lequel le calibre oscillant à trois points (31) maintient le second détecteur de température (36) en communication thermique avec la paroi intérieure de l'alésage de la pièce (101).

8. Dispositif de mesure selon la revendication 1, dans lequel le second détecteur de température (18, 36) comprend une thermistance (54).

9. Dispositif de mesure selon la revendication 1, dans lequel le second détecteur de température (18, 36) comprend une thermistance (54) montée sur le calibre (11, 31) dans une position dans laquelle il doit être maintenu en communication thermique avec la pièce (100, 101) lorsque l'indicateur de déplacement (21, 41) mesure la cote de la pièce (100, 101), et n'est pas simplement fortuitement maintenu en communication thermique avec la pièce par le calibre.

10. Dispositif de mesure selon la revendication 9, dans lequel le second détecteur de température (18, 36) comprend en outre une couche d'isolation thermique (56) entre la thermistance (54) et le calibre (11, 31) destinée à réduire le transfert de chaleur entre (i) la thermistance (54) et la pièce (100, 101) qui sont en communication thermique et (ii) le calibre (11, 31).

11. Dispositif de mesure selon la revendication 9, dans lequel le second détecteur de température (18, 36) comprend en outre une tampon thermiquement conducteur (53) qui améliore la communication thermique entre la thermistance (54) et la pièce (100, 101).

12. Dispositif de mesure selon la revendication 11, dans lequel le tampon thermiquement conducteur (53) comprend du métal.

13. Dispositif de mesure selon la revendication 12, dans lequel le métal comprend de l'argent.

14. Dispositif de mesure selon la revendication 1, dans lequel le calculateur (19, 38) comprend un calculateur numérique.

15. Dispositif selon la revendication 1, comprenant en outre un écran de visualisation (23, 39) pour l'affichage de la cote de la pièce (100, 101) normalisée en fonction de la température.

16. Dispositif de mesure selon la revendication 1, comprenant en outre
des moyens de comparaison (19, 38 ; 380), recevant la cote mesurée en provenance du calculateur (19, 38), pour comparer la cote mesurée avec une fourchette de tolérance dimensionnelle prédéterminée relative à une cote de référence prédéterminée, et
des moyens d'indication (23, 39 ; 230), réagissant à la comparaison effectuée par les moyens de comparaison, pour indiquer si, suite à la comparaison, la cote mesurée se situe à l'intérieur ou à l'extérieur de la fourchette de tolérance dimensionnelle.

17. Dispositif de mesure selon la revendication 16, comprenant en outre des moyens d'initialisation de fourchette, communiquant avec les moyens de comparaison (19, 38 ; 380), pour prédéterminer de façon variable la fourchette de tolérance dimensionnelle.

18. Dispositif de mesure selon la revendication 17, dans lequel les moyens d'initialisation visent à prédéterminer de façon variable séparément les limites à la fois supérieure et inférieure de la fourchette de tolérance dimensionnelle.

19. Dispositif de mesure selon la revendication 16, comprenant en outre des moyens d'initialisation de la cote de référence, communiquant avec les moyens de comparaison (19, 38 ; 380), pour prédéterminer de façon variable la cote de référence.
